# EUROPEAN PATENT SPECIFICATION

(11) **EP 3 483 050 B1**
(45) Date of publication and mention of the grant of the patent: **09.12.2020**
(21) Application number: 18203042.9
(22) Date of filing: 29.10.2018
(51) Int. Cl.: B62L 3/08

(54) **STRADDLED VEHICLE**
GRÄTSCHSITZFAHRZEUG
VÉHICULE À ENFOURCHER

(30) Priority: 07.11.2017 JP 2017214662
(43) Date of publication of application: 15.05.2019
(73) Proprietor: Yamaha Hatsudoki Kabushiki Kaisha, Shizuoka 438-8501 (JP)
(72) Inventor: ASADA, Yasuhiro, Shizuoka-ken, Shizuoka 438-0026 (JP); SOMA, Yosuke, Shizuoka-ken, Shizuoka 438-0026 (JP)
(74) Representative: Grünecker Patent- und Rechtsanwälte PartG mbB

(56) References cited:
- EP-A1- 2 933 156
- EP-A1- 2 949 526
- EP-A1- 3 239 008
- DE-A1-102014 223 463
- US-A- 6 070 949

## Description

This invention relates to a straddled vehicle having a hydraulic unit.

Japanese Unexamined Patent Publications No. 2013-71598 and No. 2009-90887 each disclose a two-wheeled motor vehicle having a hydraulic unit, brake calipers, and brake lines. The hydraulic unit is connected to the brake calipers through the brake lines. The hydraulic unit regulates the hydraulic pressure of brake fluid supplied to the brake calipers. The hydraulic unit, brake calipers, and brake lines are elements of an antilock brake system (ABS).

In Japanese Unexamined Patent Publication No. 2013-71598, the hydraulic unit is disposed more rearward than a rear axle. The brake calipers include a brake caliper for a front wheel. The brake lines connect the hydraulic unit and the brake calipers.

In Japanese Unexamined Patent Publication No. 2009-90887, the hydraulic unit is located more forward than a pivot shaft of a swing arm.

However, the conventional examples with such constructions have the following problems.

In Japanese Unexamined Patent Publication No. 2013-71598, there is a possibility that the hydraulic unit influences members other than the hydraulic unit (hereinafter called "other members"). Specifically, since the hydraulic unit is located more rearward than the rear axle, the distance between the hydraulic unit and the brake caliper for the front wheel is exceedingly long. Consequently, the brake line is exceedingly long. The hydraulic unit therefore influences the shapes and arrangements of other members (e.g. the brake lines and members arranged adjacent thereto).

Also in Japanese Unexamined Patent Publication No. 2009-90887, there is a possibility that the hydraulic unit influences other members. Specifically, many other members (e.g. an engine) are arranged more forward than the pivot shaft. Consequently, in order to install the hydraulic unit, it may be necessary to make design changes in arrangements and shapes of other members located more forward than the pivot shaft.

Further, in Japanese Unexamined Patent Publication No. 2009-90887, it may be difficult to locate the hydraulic unit appropriately. Specifically, in order to locate the hydraulic unit more forward than the pivot shaft, there is a possibility of requiring design changes in the position and shape of the hydraulic unit itself.

In recent years, it has been desired to install a hydraulic unit not only on a large vehicle but a medium size vehicle and a small vehicle. Compared with the large vehicle, the medium size vehicle and small vehicle have high degrees of density of the other members arranged more forward than the pivot shaft. Consequently, with the medium size vehicle and small vehicle, the other members are easily subjected to significant influences. Further, it tends to be difficult to locate the hydraulic unit more forward than the pivot shaft appropriately.

As noted above, in both Japanese Unexamined Patent Publications No. 2013-71598 and No. 2009-90887, there is a possibility that the hydraulic unit influences the shapes and arrangements of the other members. Further, in Japanese Unexamined Patent Publication No. 2009-90887, it may be difficult to locate the hydraulic unit appropriately.

This invention has been made having regard to the state of the art noted above, and its object is to provide a straddled vehicle which allows a hydraulic unit to be located appropriately while inhibiting the influence of the hydraulic unit on other members.

Inventors herein have studied on locating the hydraulic unit more forward than the rear axle and more rearward than the pivot shaft in a side view of the vehicle. Since the hydraulic unit is located more forward than the rear axle in the side view of the vehicle, the distance between the hydraulic unit and the brake caliper for the front wheel can be prevented from becoming very long. Consequently, even when the hydraulic unit is connected to the brake caliper for the front wheel, the brake line can be prevented from becoming very long. The hydraulic unit can therefore be inhibited from influencing other members. Since the hydraulic unit is located more rearward than the pivot shaft in the side view of the vehicle, the hydraulic unit can be inhibited from influencing other members. Further, it is made easy to locate the hydraulic unit appropriately.

However, Inventors herein have found a new problem arising when the hydraulic unit is located more forward than the rear axle and more rearward than the pivot shaft in the side view of the vehicle. The new problem is that there is a possibility of the hydraulic unit interfering with the rear wheel. Then, Inventors herein have made a further study on the location of the hydraulic unit.

EP2933156 discloses A straddled vehicle, according to this invention, comprises:
a body frame;
a steering device supported by the body frame;
a front wheel supported by the steering device;
a front brake mechanism for braking the front wheel;
a swing arm supported by the body frame to be swingable about a swing center relative to the body frame;
a rear wheel supported by the swing arm to be rotatable about a rotation center relative to the swing arm;
a rear brake mechanism for braking the rear wheel;
a hydraulic unit connected to at least one of the front brake mechanism and the rear brake mechanism; and
a seat supported by the body frame;
wherein
the hydraulic unit is located more rearward than the swing center in a side view of the vehicle;
the hydraulic unit is located more forward than the rotation center in the side view of the vehicle;
the body frame includes a seat frame for supporting the seat; and
at least part of the hydraulic unit is located above an upper edge of the seat frame in the side view of the vehicle.

The hydraulic unit is located more rearward than the swing center of the swing arm in the side view of the vehicle. This can conveniently inhibit the hydraulic unit from influencing the shapes and arrangements of other members. Further, it is easy to locate the hydraulic unit appropriately.

The hydraulic unit is located more forward than the rotation center of the rear wheel in the side view of the vehicle. Consequently, even when the hydraulic unit is connected to the front brake mechanism, the brake line can be prevented from becoming very long. The hydraulic unit can therefore be inhibited from influencing the other members.

At least part of the hydraulic unit is located above the upper edge of the seat frame in the side view of the vehicle. Consequently, although the hydraulic unit is, in the side view of the vehicle, located more rearward than the swing center of the swing arm and more forward than the rotation center of the rear wheel, the hydraulic unit can be conveniently prevented from interfering with the rear wheel.

According to this straddled vehicle, as noted above, the hydraulic unit can be located appropriately while inhibiting the hydraulic unit from influencing the other members.

According to the present invention, in the above straddled vehicle, the hydraulic unit is entirely located more rearward than a front end of the rear wheel in a plan view of the vehicle. With this arrangement, the hydraulic unit can be located more appropriately while further inhibiting the hydraulic unit from influencing the other members.

In the above straddled vehicle, it is preferred that the straddled vehicle comprises tandem steps for receiving a fellow passenger's feet; wherein the hydraulic unit is located more rearward than the tandem steps in the side view of the vehicle. With this arrangement, the hydraulic unit can be located more appropriately while further inhibiting the hydraulic unit from influencing the other members.

In the above straddled vehicle, it is preferred that the straddled vehicle comprises grab bars for grabbing by a fellow passenger; wherein the hydraulic unit is located more rearward than front ends of the grab bars in the side view of the vehicle. With this arrangement, the hydraulic unit can be located more appropriately while further inhibiting the hydraulic unit from influencing the other members.

In the above straddled vehicle, it is preferred that the hydraulic unit overlaps the seat in the plan view of the vehicle. The seat is located in a middle part of the straddled vehicle in a transverse direction of the straddled vehicle (hereinafter called simply "the transverse direction"). Since the hydraulic unit overlaps the seat in the plan view of the vehicle, the hydraulic unit is also located in the middle part in the transverse direction of the straddled vehicle. The hydraulic unit can therefore be conveniently inhibited from wobbling in the transverse direction. That is, the hydraulic unit can be located more conveniently.

In the above straddled vehicle, it is preferred that the seat includes a seating portion; and the hydraulic unit is located below a back surface of the seating portion. With this arrangement, the hydraulic unit can be conveniently protected by the seating portion.

In the above straddled vehicle, it is preferred that the seating portion includes a front seating portion for contacting a rider's buttocks; and a rear seating portion located more rearward than the front seating portion in the side view of the vehicle for contacting a fellow passenger's buttocks; and the hydraulic unit has a rear end thereof located more rearward, in the plan view of the vehicle, than a boundary between the front seating portion and the rear seating portion. With this arrangement, an installation space for the hydraulic unit can be secured easily.

In the above straddled vehicle, it is preferred that the hydraulic unit has a front end thereof located more rearward, in the plan view of the vehicle, than the boundary between the front seating portion and the rear seating portion. With this arrangement, an installation space for the hydraulic unit can be secured with increased ease.

In the above straddled vehicle, it is preferred that the hydraulic unit has an upper end thereof located in a position higher than a lowest point of the back surface of the seating portion in a section perpendicular to the transverse direction of the straddled vehicle. With this arrangement, the hydraulic unit is located in a relatively high position. The hydraulic unit can therefore be more conveniently prevented from interfering with the rear wheel.

In the above straddled vehicle, it is preferred that the seat includes a right wall portion extending downward from a right edge of the seating portion; and a left wall portion extending downward from a left edge of the seating portion; the hydraulic unit is located more leftward than the right wall portion; the hydraulic unit is located more rightward than the left wall portion; and the upper end of the hydraulic unit is, in the side view of the vehicle, located above at least one of a lower edge of the right wall portion and a lower edge of the left wall portion. This arrangement uses the space demarcated by the seating portion, right wall portion, and left wall portion as installation space for the hydraulic unit. The hydraulic unit can therefore be located appropriately while inhibiting the hydraulic unit from influencing the other members. The upper end of the hydraulic unit is, in the side view of the vehicle, located above at least one of the lower edge of the right wall portion and the lower edge of the left wall portion. Thus, the hydraulic unit is located in a relatively high position. This can more conveniently prevent the hydraulic unit from interfering with the rear wheel. Further, the hydraulic unit can be conveniently protected by at least one of the right wall portion and the left wall portion.

In the above straddled vehicle, it is preferred that the hydraulic unit is located above a lower edge of the seat frame in the side view of the vehicle. With this arrangement, the hydraulic unit is located in a relatively high position. The hydraulic unit can therefore be more conveniently prevented from interfering with the rear wheel.

In the above straddled vehicle, it is preferred that part of the hydraulic unit overlaps the seat frame in the side view of the vehicle. With this arrangement, the hydraulic unit can be conveniently protected by the seat frame.

In the above straddled vehicle, it is preferred that the seat frame includes a right seat frame; and a left seat frame located more leftward than the right seat frame; the hydraulic unit is located leftward of the right seat frame in the plan view of the vehicle; and the hydraulic unit is located rightward of the left seat frame in the plan view of the vehicle. With this arrangement, the hydraulic unit can be conveniently protected by the right seat frame and the left seat frame.

In the above straddled vehicle, it is preferred that the straddled vehicle comprises an air cleaner; wherein the rear end of the hydraulic unit is located more rearward than a rear end of the air cleaner in the plan view of the vehicle. With this arrangement, the hydraulic unit can be conveniently inhibited from influencing the air cleaner.

In the above straddled vehicle, it is preferred that the body frame includes a back stay located below the seat frame in the side view of the vehicle; and with swinging of the swing arm relative to the body frame, part of the rear wheel is movable above an upper edge of the back stay in the side view of the vehicle. That is, a movable region of the rear wheel preferably extends to an area above the upper edge of the back stay in the side view of the vehicle. The rear wheel is movable to a relatively high position relative to the body frame. The movable region of the rear wheel is relatively large. Even in such a case, according to this straddled vehicle, the hydraulic unit can be conveniently prevented from interfering with the rear wheel. That is, the larger movable region of the rear wheel provides the higher utility of this straddled vehicle.

This specification also discloses the following invention relating to the straddled vehicle.

(1) The straddled vehicle described above, wherein the hydraulic unit overlaps the rear wheel in the plan view of the vehicle.

According to (1) above, the rear wheel is located in a middle part in the trans-verse direction of the straddled vehicle. Since the hydraulic unit overlaps the rear wheel in the plan view of the vehicle, the hydraulic unit is also located in the middle part in the transverse direction of the straddled vehicle. The hydraulic unit can therefore be conveniently inhibited from wobbling in the transverse direction. That is, the hydraulic unit can be located more conveniently.

(2) The straddled vehicle described above, wherein the hydraulic unit is located below a back surface of the rear seating portion.

According to (2) above, the hydraulic unit can be conveniently protected by the rear seating portion.

(3) The straddled vehicle described above, wherein the hydraulic unit is, in the section perpendicular to the transverse direction of the straddled vehicle, located more forward than a middle point between a front end of the rear seating portion and a rear end of the rear seating portion.

According to (3) above, a lowering of the seating comfort of the rear seating portion can be conveniently inhibited.

(4) The straddled vehicle described above, wherein the hydraulic unit is, in the section perpendicular to the transverse direction of the straddled vehicle, located more forward than a lowest point of an upper surface of the rear seating portion.

According to (4) above, a lowering of the seating comfort of the rear seating portion can be effectively inhibited.

(5) The straddled vehicle described above, wherein the upper end of the hydraulic unit is, in the section perpendicular to the transverse direction of the straddled vehicle, located in a position higher than a lowest point of an upper surface of the seating portion.

According to (5) above, the hydraulic unit is located in a relatively high position. The hydraulic unit can therefore be more conveniently prevented from interfering with the rear wheel.

(6) The straddled vehicle described above, wherein the back surface of the seating portion includes a first portion more rearward than the front end of the hydraulic unit and more forward than the rear end of the hydraulic unit; and the first portion is substantially horizontal in the section perpendicular to the transverse direction of the straddled vehicle.

According to (6) above, the hydraulic unit is located below the first portion. The first portion is substantially horizontal in the section perpendicular to the transverse direction. Consequently, a space having a shape easy to use as installation space for the hydraulic unit can be formed below the first portion. The hydraulic unit can therefore be located more appropriately.

(7) The straddled vehicle described above, wherein the first portion is, in the section perpendicular to the transverse direction of the straddled vehicle, located in a position higher than the lowest point of the upper surface of the seating portion.

According to (7) above, the space below the first portion is relatively high (large). The hydraulic unit can therefore be located more appropriately.

(8) The straddled vehicle described above, wherein the first portion is located more rearward than the front end of the rear seating portion.

According to (8) above, the hydraulic unit is located more rearward than the front end of the rear seating portion. With this arrangement, an installation space for the hydraulic unit can be secured easily.

(9) The straddled vehicle described above, wherein the back surface of the seating portion includes a second portion located more forward than the first portion, and the second portion includes a low part located in a position lower than the first portion in the section perpendicular to the transverse direction of the straddled vehicle.

According to (9) above, compared with the space formed below the first portion, the space formed below the low part is low (small). Therefore, compared with space below the first portion, the space below the second portion is difficult to use as installation space for the hydraulic unit. Even in such a case, since the hydraulic unit is located in the space below the first portion, the hydraulic unit can be located appropriately. This arrangement provides the higher utility, the more difficult it is to use the space below the second portion as installation space for the hydraulic unit.

(10) The straddled vehicle described above, wherein the back surface of the front seating portion extends downward and forward from the rear end of the front seating portion in the section perpendicular to the transverse direction of the straddled vehicle, and the rear end of the hydraulic unit is located more rearward than the rear end of the front seating portion in the section perpendicular to the transverse direction of the straddled vehicle.

According to (10) above, the back surface of the front seating portion extends downward and forward from the rear end of the front seating portion in the section perpendicular to the transverse direction. Consequently, the space formed below the back surface of the front seating portion becomes low (becomes small) as it extends forward from the rear end of the front seating portion. The space below the front seating portion is therefore difficult to use as installation space for the hydraulic unit. On the other hand, the rear end of the hydraulic unit is located more rearward than the rear end of the front seating portion in the section perpendicular to the transverse direction. That is, at least part of the hydraulic unit is located more rearward than the front seating portion. Therefore, although the space below the front seating portion is difficult to use as installation space for the hydraulic unit, an installation space for the hydraulic unit can be secured easily. The more difficult it is to use the space below the front seating portion as installation space for the hydraulic unit, the higher utility is afforded by this arrangement.

(11) The straddled vehicle described above, wherein the front end of the hydraulic unit is located more rearward than the rear end of the front seating portion in the section perpendicular to the transverse direction of the straddled vehicle.

According to (11) above, the entire hydraulic unit is located more rearward than the front seating portion. Therefore, even where the space below the front seating portion is difficult to use as installation space for the hydraulic unit, an installation space for the hydraulic unit can be secured easily.

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to an embodiment;
Fig. 2 is a left side view of the straddled vehicle;
Fig. 3 is a plan view of the straddled vehicle;
Fig. 4 is a front view of the straddled vehicle;
Fig. 5 is a schematic view of a brake system;
Fig. 6 is a left side view of a portion of the straddled vehicle;
Fig. 7 is a plan view of the portion of the straddled vehicle;
Fig. 8 is a plan view of the portion of the straddled vehicle;
Fig. 9 is a section taken on line IX-IX of Fig. 8;
Fig. 10 is a section taken on line X-X of Fig. 8; and
Fig. 11 is a left side view of a portion of the straddled vehicle.

A straddled vehicle according to this invention will be described hereinafter with reference to the drawings.

### 1. Outline construction of the straddled vehicle

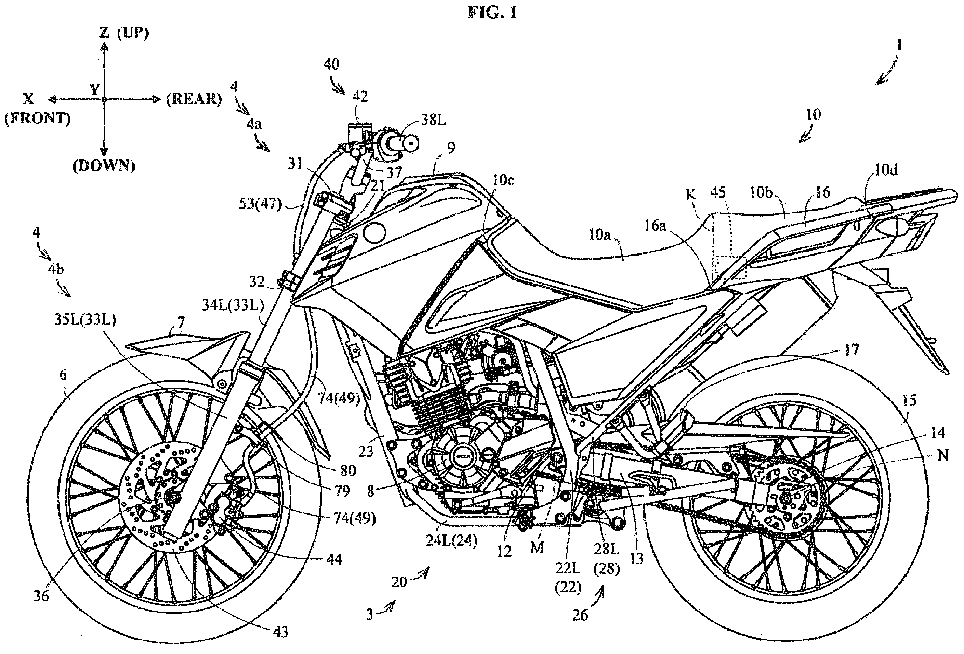

Fig. 1 is a left side view of a straddled vehicle according to an embodiment.

Fig. 1 shows a longitudinal direction X, a transverse direction Y, and an up-down direction Z of a straddled vehicle 1. The longitudinal direction X, transverse direction Y, and up-down direction Z are defined with reference to a rider mounted on the straddled vehicle 1. The rider is a person who is mounted on the straddled vehicle 1 and controls the straddled vehicle 1. The longitudinal direction X, transverse direction Y, and up-down direction Z are perpendicular to one another.

The terms "forward", "rearward", "upward", "downward", rightward", and "leftward", respectively, mean "forward", "rearward", "upward", "downward", rightward", and "leftward" as seen from the rider mounted on the straddled vehicle 1. In this specification, unless otherwise specified, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. Fig. 1 shows, by way of reference, forward, rearward, upward, downward, rightward, and leftward as appropriate.

It is to be understood that, in this specification, various expressions describing arrangements have the following meanings, respectively. The following description will be made taking the transverse direction Y for example, and the same applies to the longitudinal direction X and the up-down direction Z.

The expression "member A is located more rightward / leftward than member B" provides a position of member A relative to member B in the transverse direction Y, and does not provide a position of member A relative to member B in the longitudinal direction X or the up-down direction Z. With this expression, member A may, or may not, overlap member B in a side view of the vehicle.

The expression "member A is located rightward / leftward of member B" without reference to a looking direction provides a position of member A relative to member B in the transverse direction Y, a position of member A relative to member B in longitudinal direction X, and a position of member A relative to member B in the up-down direction Z. This expression means that member A is located more rightward / leftward than member B, with at least part of member A overlapping at least part of member B in a side view of the vehicle.

The expression "member A is located rightward / leftward of member B in a plan view of the vehicle" provides a position of member A relative to member B in the trans-verse direction Y, and a position of member A relative to member B in the longitudinal direction X, and does not provide a position of member A relative to member B in the up-down direction Z. This expression means that member A is located more rightward / leftward than member B, with the front end of member A located more forward than the rear end of member B, and with the rear end of member A located more rearward than the front end of member B.

The expression "member A is located rightward / leftward of member B in a front view of the vehicle" provides a position of member A relative to member B in the transverse direction Y, and a position of member A relative to member B in the up-down direction Z, and does not provide a position of member A relative to member B in the longitudinal direction X. This expression means that member A is located more rightward / leftward than member B, with the upper end of member A located higher than the lower end of member B, and the lower end of member A located lower than the upper end of member B.

The straddled vehicle 1 is a dual purpose vehicle, for example. The straddled vehicle 1 is also called a dual-sport motorcycle.

The straddled vehicle 1 has a body frame 3, a steering device 4, and a front wheel 6. The steering device 4 is supported by the body frame 3. The steering device 4 is rotatable relative to the body frame 3. The front wheel 6 is supported by the steering device 4. With a rotation of the steering device 4 relative to the body frame 3, the direction of the front wheel 6 changes relative to the body frame 3 to change the course of the straddled vehicle 1.

In Fig. 1, the steering device 4 is in neutral position relative to the body frame 3. When the steering device 4 is in neutral position, the straddled vehicle 1 travels straight forward parallel to the longitudinal direction X.

The straddled vehicle 1 has a front fender 7. The front fender 7 is located above the front wheel 6. Though not shown, at least part of the front fender 7 overlaps the front wheel 6 in a plan view of the straddled vehicle 1 (hereinafter referred to as "in the plan view of the vehicle" where appropriate). The front fender 7 is supported by the steering device 4.

The straddled vehicle 1 has an engine 8, a fuel tank 9, and a seat 10. The engine 8 is located in a position lower than the fuel tank 9 and seat 10. The fuel tank 9 is located more forward than the seat 10 in a side view of the straddled vehicle 1 (hereinafter referred to as "in the side view of the vehicle" where appropriate). At least part of the fuel tank 9 is located in a position higher than the seat 10. The engine 8, fuel tank 9, and seat 10 are supported by the body frame 3, respectively.

The seat 10 includes a front seat 10a for seating the rider and a rear seat 10b for seating a fellow passenger. The fellow passenger is a person who travels with the rider on the straddled vehicle 1, but does not control the straddled vehicle 1. The front seat 10a is located more forward than the rear seat 10b in the side view of the vehicle. The front seat 10a and rear seat 10b are formed integral. Fig. 1 schematically shows a boundary K between the front seat 10a and rear seat 10b. The front seat 10a and rear seat 10b adjoin each other at the boundary K. The boundary K corresponds to a rear end of the front seat 10a, and corresponds to a front end of the rear seat 10b.

The front seat 10a extends forward and downward from the boundary K in the side view of the vehicle. The rear seat 10b extends rearward and substantially horizon-tally from the boundary K in the side view of the vehicle. Thus, the rear seat 10b is located in a position one stage higher than the front seat 10a in the side view of the vehicle. The boundary K and its vicinity have a ridged shape in the side view of the vehicle.

The straddled vehicle 1 has a pivot shaft 12 and a swing arm 13. The pivot shaft 12 is located more rearward than the fuel tank 9 in the side view of the vehicle. The pivot shaft 12 is located more rearward than a front end 10c of the seat 10 and more forward than a rear end 10d of the seat 10 in the side view of the vehicle. The pivot shaft 12 is located in a position lower than the fuel tank 9 and seat 10. The pivot shaft 12 is supported by the body frame 3. The swing arm 13 is supported by the pivot shaft 12. Consequently, the swing arm 13 is supported by the body frame 3. The swing arm 13 is swingable about the pivot shaft 12 relative to the body frame 3. The swing arm 13 extends rearward from the pivot shaft 12.

Here, the center about which the swing arm 13 swings relative to the body frame 3 is called "swing center M". The swing center M is an imaginary line. The swing center M corresponds to the axis of the pivot shaft 12. The swing center M is parallel to the transverse direction Y, for example. The swing arm 13 is rotatable about the swing center M relative to the body frame 3.

The straddled vehicle 1 has a rear axle 14 and a rear wheel 15. The rear axle 14 is supported by a rear portion of the swing arm 13. The rear wheel 15 is supported by the rear axle 14. Consequently, the rear wheel 15 is supported by the swing arm 13. With swinging of the swing arm 13 relative to the body frame 3, the rear axle 14 and rear wheel 15 move upward and downward relative to the body frame 3, respectively. Further, the rear wheel 15 is rotatable about the rear axle 14 relative to the swing arm 13.

Here, the center about which the rear wheel 15 rotates relative to the swing arm 13 is called "rotation center N". The rotation center N is an imaginary line. The rotation center N corresponds to the axis of the rear axle 14. The rotation center N is parallel to the transverse direction Y, for example. The rear wheel 15 is rotatable about the rotation center N relative to the swing arm 13.

The straddled vehicle 1 has a transmission mechanism not shown. The transmission mechanism transmits power generated by the engine 8 to the rear wheel 15 to rotate the rear wheel 15 about the rear axle 14.

The straddled vehicle 1 has grab bars 16 for grabbing by the fellow passenger, and tandem steps 17 for supporting the fellow passenger's feet. At least part of the grab bars 16 overlaps the seat 10 (specifically, the rear seat 10b) in the side view of the vehicle. The tandem steps 17 are located in positions lower than the seat 10 and grab bars 16. The tandem steps 17 are located more rearward than the pivot shaft 12 and more forward than the rear axle 14 in the side view of the vehicle. The tandem steps 17 are also called rear footrests.

The rider of the straddled vehicle 1 sits straddling the seat 10 (specifically, the front seat 10a). The rider puts on a knee grip. The knee grip is a holding of part of the straddled vehicle 1 between the rider's legs. For example, the rider holds at least either the body frame 3 or the fuel tank 9 between his legs. The fellow passenger on the straddled vehicle 1 sits straddling the seat 10 (specifically, the rear seat 10b) behind the rider. The fellow passenger grabs the grab bars 16. The fellow passenger puts their feet on the tandem steps 17.

### 2. Body frame

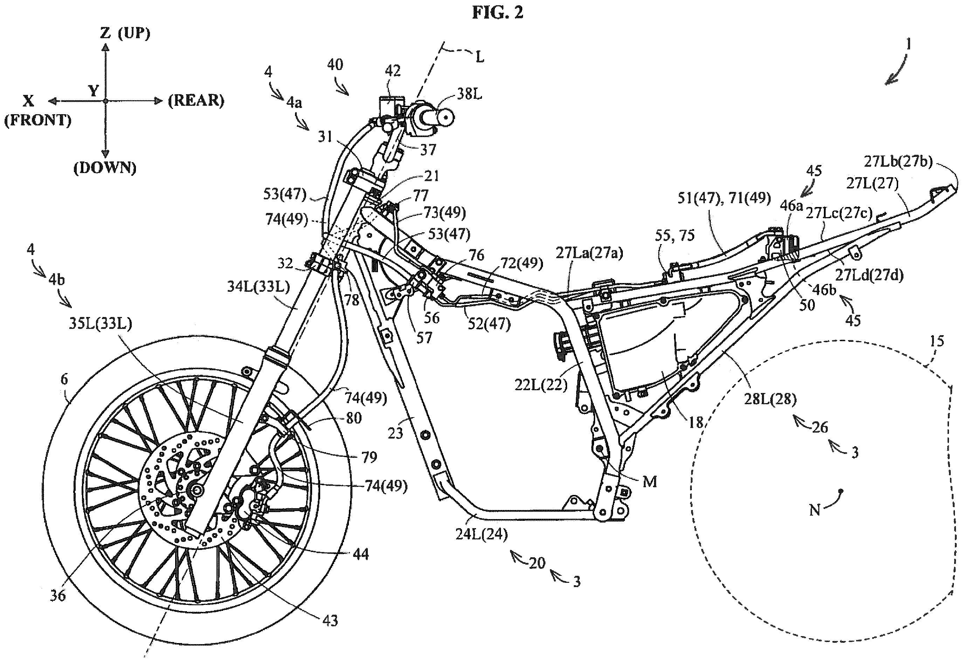

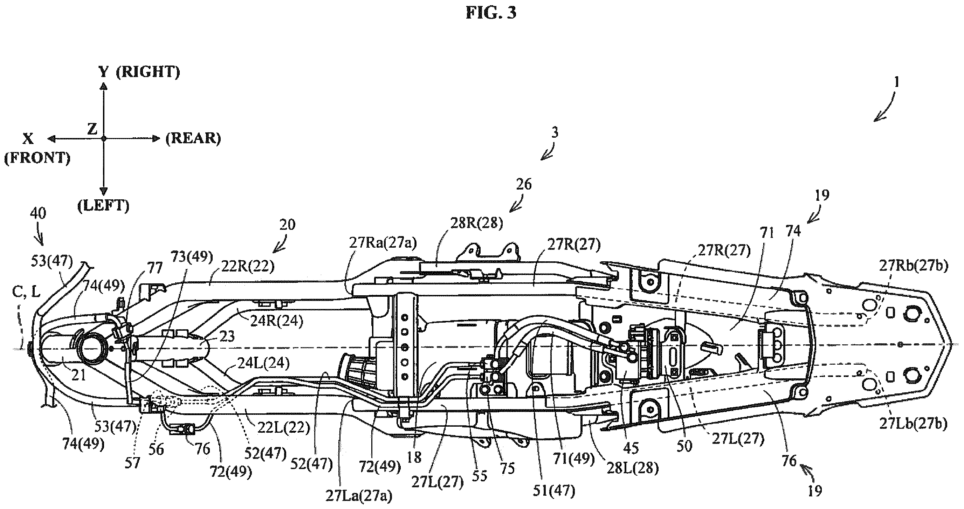

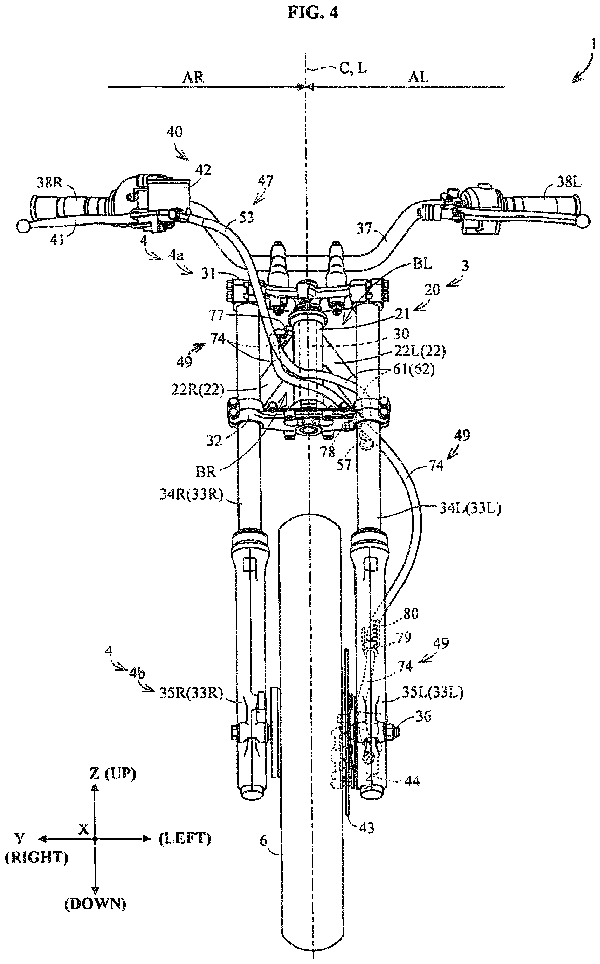

Fig. 2 is a left side view of the straddled vehicle. Fig. 3 is a plan view of the straddled vehicle. Figs. 2 and 3 omit illustration of certain members included in the straddled vehicle, respectively. Fig. 2 shows an outline of the rear wheel 15 in a broken line. Fig. 3 schematically shows a vehicle center line C with respect to the transverse direction Y. The vehicle center line C is an imaginary line in a plane passing through the center of the straddled vehicle 1 and extending perpendicular to the transverse direction Y. Fig. 4 described hereinafter also shows the vehicle center line C as appropriate.

The body frame 3 has a front frame 20 and a rear frame 26. The front frame 20 is located in a front part of the body frame 3. The rear frame 26 is located in a rear part of the body frame 3. The rear frame 26 is connected to a rear part of the front frame 20.

The front frame 20 has a head tube 21. The head tube 21 is located at a front end of the front frame 20. The head tube 21 has a through-hole centering on a center axis L thereof. The center axis L is an imaginary line extending forward and downward in the side view of the vehicle. The center axis L overlaps the vehicle center line C in the plan view of the vehicle.

The front frame 20 has a main frame 22. The main frame 22 has a right main frame 22R and a left main frame 22L. The left main frame 22L is connected to the head tube 21. The left main frame 22L extends rearward and downward from the head tube 21 in the side view of the vehicle. The right main frame 22R is located more rightward than the left main frame 22L. The right main frame 22R has the same construction and shape as the left main frame 22L except for being symmetric. The right main frame 22R overlaps the left main frame 22L in the side view of the vehicle.

The front frame 20 has a down frame 23. The down frame 23 is connected to the head tube 21. The down frame 23 extends rearward and downward from the head tube 21. The down frame 23 is located below the main frame 22 in the side view of the vehicle.

The front frame 20 has a lower frame 24. The lower frame 24 has a right lower frame 24R and a left lower frame 24L. The left lower frame 24L is connected to a lower part of the down frame 23. The left lower frame 24L extends rearward from the lower part of the down frame 23. The left lower frame 24L is connected to a rear part of the left main frame 22L. The right lower frame 24R is located more rightward than the left lower frame 24L. The right lower frame 24R has the same construction and shape as the left lower frame 24L except for being symmetric. The right lower frame 24R overlaps the left lower frame 24L in the side view of the vehicle.

The rear frame 26 has a seat frame 27. The seat frame 27 has a right seat frame 27R and a left seat frame 27L. The left seat frame 27L is connected to the left main frame 22L. The left seat frame 27L extends rearward from the left main frame 22L. The right seat frame 27R is located more rightward than the left seat frame 27L. The right seat frame 27R has the same construction and shape as the left seat frame 27L except for being symmetric. The right seat frame 27R overlaps the left seat frame 27L in the side view of the vehicle.

The rear frame 26 has a back stay 28. The back stay 28 has a right back stay 28R and a left back stay 28L. The left back stay 28L is located below the seat frame 27 in the side view of the vehicle. The left back stay 28L has a front part thereof connected to the left main frame 22L. The left back stay 28L extends rearward and upward from the left main frame 22L. The left back stay 28L has a rear part thereof connected to the left seat frame 27L. The right back stay 28R is located more rightward than the left back stay 28L. The right back stay 28R has the same construction and shape as the left back stay 28L except for being symmetric. The right back stay 28R overlaps the left back stay 28L in the side view of the vehicle.

The engine 8, fuel tank 9, seat 10, and pivot shaft 12 are arranged more rearward than the head tube 21 in the side view of the vehicle, respectively. The front frame 20 supports the engine 8, fuel tank 9, and pivot shaft 12. Specifically, the main frame 22, down frame 23, and lower frame 24, respectively, support the engine 8. The main frame 22 supports the fuel tank 9 and pivot shaft 12. The rear frame 26 (specifically, the seat frame 27) supports the seat 10.

The straddled vehicle 1 has an air cleaner 18. The air cleaner 18 is located more rearward than the engine 8 and fuel tank 9 in the side view of the vehicle. The air cleaner 18 is located in a position lower than the fuel tank 9 and seat 10. At least part of the air cleaner 18 is located, in the side view of the vehicle, in a region demarcated by the main frame 22, seat frame 27, and back stay 28. The air cleaner 18 is supported by at least one of the main frame 22, seat frame 27, and back stay 28.

Reference is made to Fig. 3. The straddled vehicle 1 has a rear fender 19. The rear fender 19 overlaps the seat frame 27 in the plan view of the vehicle. The rear fender 19 is supported by the body frame 3. The rear fender 19 is supported by the seat frame 27. Further, the rear fender 19 may be supported by the back stay 28. Though not shown, the rear fender 19 is located above the rear wheel 15 in the side view of the vehicle. At least part of the rear fender 19 overlaps the rear wheel 15 in the plan view of the vehicle.

### 3. Steering device

Fig. 4 is a front view of the straddled vehicle. Fig. 4 omits illustration of certain members included in the straddled vehicle. Fig. 4 shows the steering device 4 in neutral position.

The steering device 4 has a steering shaft 30, an upper bracket 31, and an under bracket 32. The steering shaft 30 is located in the through-hole of the head tube 21. The steering shaft 30 is supported by the head tube 21 to be rotatable about the center axis L of the head tube 21. The center axis L extends in the up-down direction Z in the front view of the straddled vehicle 1 (hereinafter referred to as "in the front view of the vehicle" where appropriate). The center axis L overlaps the vehicle center line C in the front view of the vehicle. The upper bracket 31 is supported by the steering shaft 30. The upper bracket 31 is connected to an upper part of the steering shaft 30. The upper bracket 31 is located adjacent an upper end of the head tube 21. The under bracket 32 is supported by the steering shaft 30. The under bracket 32 is connected to a lower part of the steering shaft 30. The under bracket 32 is located adjacent a lower end of the head tube 21. The under bracket 32 is located in a position lower than the upper bracket 31. The under bracket 32 is located in a position higher than the front wheel 6 and front fender 7 (see Fig. 1).

The steering device 4 has a right front fork 33R and a left front fork 33L. The right front fork 33R and left front fork 33L extend in directions substantially parallel to the center axis L of the head tube 21, respectively. The right front fork 33R and left front fork 33L are supported by the upper bracket 31 and under bracket 32, respectively. Each of the right front fork 33R and left front fork 33L is extendible and contractible.

When the steering device 4 is in neutral position, the right front fork 33R is located more rightward than the left front fork 33L in the front view of the vehicle. When the steering device 4 is not in neutral position also, the right front fork 33R may be located more rightward than the left front fork 33L in the front view of the vehicle. That is, the above positional relationship holds at least when the steering device 4 is in neutral position. This is the same also in the following description. When the steering device 4 is in neutral position, the right front fork 33R is located more rightward than the head tube 21 in the front view of the vehicle. When the steering device 4 is in neutral position, the left front fork 33L is located more leftward than the head tube 21 in the front view of the vehicle.

Reference is made to Fig. 2. When the steering device 4 is in neutral position, the left front fork 33L overlaps the right front fork 33R in the side view of the vehicle. When the steering device 4 is in neutral position, the left front fork 33L and right front fork 33R overlap part of the head tube 21 in the side view of the vehicle, respectively.

Reference is made to Fig. 4. The right front fork 33R has an upper right tube 34R and a lower right tube 35R. The left front fork 33L has an upper left tube 34L and a lower left tube 35L. The upper right tube 34R and upper left tube 34L are supported by the upper bracket 31 and under bracket 32, respectively. The lower right tube 35R and lower left tube 35L are arranged in positions lower than the under bracket 32, respectively. The lower right tube 35R is connected to the upper right tube 34R. The lower right tube 35R extends downward and forward from the upper right tube 34R. The lower right tube 35R is movable relative to the upper right tube 34R. Movements of the lower right tube 35R relative to the upper right tube 34R correspond to extension and contraction of the right front fork 33R. The lower left tube 35L is connected to the upper left tube 34L. The lower left tube 35L extends downward and forward from the upper left tube 34L. The lower left tube 35L is movable relative to the upper left tube 34L. Movements of the lower left tube 35L relative to the upper left tube 34L correspond to extension and contraction of the left front fork 33L.

The steering device 4 has a front axle 36. The front axle 36 is supported by the right front fork 33R and left front fork 33L. The front axle 36 is supported by the lower right tube 35R and lower left tube 35L. The front axle 36 is located in a position lower than the under bracket 32, upper right tube 34R, and upper left tube 34L. When the steering device 4 is in neutral position, the front axle 36 extends in a direction parallel to the transverse direction Y. The front axle 36 supports the front wheel 6. The front wheel 6 is rotatable about the front axle 36 relative to the lower right tube 35R and lower left tube 35L.

The steering device 4 has a handlebar 37, a right grip 38R, and a left grip 38L. The handlebar 37 is supported by the upper bracket 31. The handlebar 37 is located in a position higher than the upper bracket 31. The right grip 38R is attached to a first end of the handlebar 37. The left grip 38L is attached to a second end of the handlebar 37. The rider of the straddled vehicle 1 grasps the right grip 38R and left grip 38L to operate the handlebar 37. In response to operation of the handlebar 37, the steering device 4 rotates about the center axis L relative to the body frame 3.

The steering shaft 30, upper bracket 31, under bracket 32, upper right tube 34R, upper left tube 34L, and handlebar 37 are fixedly connected together. There occurs no change in relative positions of the steering shaft 30, upper bracket 31, under bracket 32, upper right tube 34R, upper left tube 34L, and handlebar 37. The steering shaft 30, upper bracket 31, under bracket 32, upper right tube 34R, upper left tube 34L, and handlebar 37 will collectively be called hereinafter the "upper device 4a" where appropriate. The lower right tube 35R, lower left tube 35L, and front axle 36 will collectively be called hereinafter the "lower device 4b" where appropriate.

When the right front fork 33R and left front fork 33L are extended and contracted, the lower device 4b moves relative to the upper device 4a. The extension and contraction of the right front fork 33R and left front fork 33L do not result in movement of the upper device 4a relative to the body frame 3.

### 4. Outline construction of brake system

Reference is made to Fig. 4. The straddled vehicle 1 has a brake system 40. The brake system 40 has a brake lever 41 and a master cylinder 42. The brake lever 41 and master cylinder 42 are supported by the steering device 4, respectively. The brake lever 41 and master cylinder 42 are supported by the handlebar 37, respectively. The brake lever 41 and master cylinder 42 are arranged adjacent the right grip 38R, respectively. The master cylinder 42 is immovable relative to the upper device 4a. The rider on the straddled vehicle 1 operates the brake lever 41. In response to operation of the brake lever 41, the master cylinder 42 generates a hydraulic pressure of brake fluid.

Reference is made to Figs. 1, 2, and 4. The brake system 40 has a brake disc 43 and a brake caliper 44. The brake disc 43 is fixedly connected to the front wheel 6. The brake disc 43 is rotatable with the front wheel 6 about the front axle 36. The brake caliper 44 is supported by the steering device 4. The brake caliper 44 is supported by the lower left tube 35L. The brake caliper 44 is immovable relative to the lower device 4b. The brake caliper 44 is hydraulically operable. The brake caliper 44, with the hydraulic pressure of the brake fluid, brakes rotation of the front wheel 6 about the front axle 36. More particularly, the brake caliper 44 applies resistance (specifically, frictional force) to the brake disc 43 (i.e. the front wheel 6) for braking rotation of the front wheel 6. That is, the brake caliper 44 brakes the front wheel 6.

Reference is made to Fig. 2. The brake system 40 has a hydraulic unit 45, primary piping 47, and secondary piping 49. The hydraulic unit 45 is supported by the body frame 3. The hydraulic unit 45 is supported by the rear frame 26 (specifically, the seat frame 27). The hydraulic unit 45 is immovable relative to the body frame 3. The primary piping 47 and secondary piping 49 are brake lines, respectively. The primary piping 47 connects the hydraulic unit 45 and master cylinder 42 to provide communication therebetween. The primary piping 47 inputs to the hydraulic unit 45 the hydraulic pressure of the brake fluid generated by the master cylinder 42. The hydraulic unit 45 regulates the hydraulic pressure of the brake fluid. Specifically, the hydraulic unit 45 regulates the hydraulic pressure of the brake fluid generated by the master cylinder 42. For example, the hydraulic unit 45 regulates the hydraulic pressure of the brake fluid to prevent a lock tendency of the front wheel 6. The secondary piping 49 connects the hydraulic unit 45 and brake caliper 44 to provide communication therebetween. The secondary piping 49 outputs the hydraulic pressure of the brake fluid regulated by the hydraulic unit 45 to the brake caliper 44. Consequently, the brake caliper 44 brakes the front wheel 6 in response to the hydraulic pressure of the brake fluid regulated by the hydraulic unit 45.

The brake system 40 has a bracket 50 for supporting the hydraulic unit 45. The hydraulic unit 45 is connected to the bracket 50. The bracket 50 is connected to the rear fender 19. The rear fender 19 is supported by the seat frame 27. Thus, the hydraulic unit 45 is indirectly supported by the seat frame 27.

Reference is made to Figs. 2 and 3. The primary piping 47 includes pipes 51, 52 and 53. The pipes 51, 52 and 53 are connected in this order in series. The pipe 51 is connected to the hydraulic unit 45. The pipe 53 is connected to the master cylinder 42. The pipes 51 and 53 have flexibility, respectively. The pipes 51 and 53 are rubber pipes, for example. The pipe 52 does not have flexibility. The pipe 52 is a metal pipe, for example.

The brake system 40 includes a joint 55 and a joint 56. The joint 55 connects the pipe 51 and pipe 52. The joint 56 connects the pipe 52 and pipe 53. Consequently, the joint 55 and joint 56 hold the primary piping 47, respectively. The joint 55 and joint 56 are supported by the body frame 3, respectively. The joint 55 is supported by the rear frame 26 (specifically, the left seat frame 27L). The joint 56 is supported by the front frame 20 (specifically, the left main frame 22L). The joint 55 and joint 56 are immovable relative to the body frame 3, respectively.

The joint 55 has a box shape. Though not shown, the joint 55 has a first port, a second port, and a flow path. The first port connects to the pipe 51. The second port connects to the pipe 52. The flow path is formed inside the joint 55. The flow path provides communication between the first port and second port.

The joint 56 has a pipe shape. The joint 56 has a first end and a second end. The first end of the joint 56 connects to the pipe 52. The second end of the joint 56 connects to the pipe 53.

The brake system 40 has a clamp 57. The clamp 57 holds the primary piping 47. The clamp 57 is supported by the body frame 3. The clamp 57 is supported by the front frame 20 (specifically, the left main frame 22L). The clamp 57 is immovable relative to the body frame 3.

The clamp 57 has a hollow portion slightly larger than an outside diameter of the pipe 53. The clamp 57 is ring-shaped, for example. The pipe 53 is located in the hollow portion of the clamp 57. The clamp 57 is in tight contact with an outer circumferential surface of the pipe 53. Consequently, the clamp 57 holds the pipe 53.

The secondary piping 49 includes pipes 71, 72, 73 and 74. The pipes 71, 72, 73 and 74 are connected in this order in series. The pipe 71 is connected to the hydraulic unit 45. The pipe 74 is connected to the brake caliper 44. The pipes 71 and 74 have flexibility, respectively. The pipes 71 and 74 are rubber pipes, for example. The pipes 72 and 73 do not have flexibility. The pipes 72 and 73 are metal pipes, for example.

The brake system 40 includes joints 75, 76 and 77. The joint 75 connects the pipe 71 and pipe 72. The joint 76 connects the pipe 72 and pipe 73. The joint 77 connects the pipe 73 and pipe 74. Consequently, the joints 75-77 hold the secondary piping 49, respectively. The joints 75-77 are supported by the body frame 3, respectively. The joint 75 is supported by the rear frame 26 (specifically, the left seat frame 27L). The joint 76 is supported by the front frame 20 (specifically, the left main frame 22L). The joint 77 is supported by the front frame 20 (specifically, the right main frame 22R). The joints 75, 76 and 77 are immovable relative to the body frame 3, respectively. The joints 75, 76 and 77 have substantially the same construction as the joint 55.

Reference is made to Fig. 2. The brake system 40 has clamps 78 and 79. The clamps 78 and 79 hold the secondary piping 49 (specifically, the pipe 74), respectively. The clamps 78 and 79 are supported by the steering device 4, respectively. The clamps 78 and 79 are immovable relative to the steering device 4, respectively. More particularly, the clamp 78 is supported by the under bracket 32. The clamp 78 is immovable relative to the upper device 4a. The clamp 79 is supported by the lower left tube 35L. The clamp 79 is immovable relative to the lower device 4b. The clamps 78 and 79 have substantially the same construction as the clamp 57.

The brake system 40 has a guide 80. The guide 80 guides the secondary piping 49. The guide 80 is supported by the steering device 4. The guide 80 is supported by the lower left tube 35L.

The guide 80 has a hollow portion sufficiently larger than an outside diameter of the pipe 74. The guide 80 is ring-shaped, for example. The pipe 74 is located in the hollow portion of the guide 80. The guide 80 guides the pipe 74 so that the pipe 74 pass through the hollow portion of the guide 80. In other words, the guide 80 restrains the pipe 74 from coming off the hollow portion of the guide 80. As long as the pipe 74 passes through the hollow portion of the guide 80, the pipe 74 is movable relative to the steering device 4.

Reference is made to Figs. 2 and 3. The hydraulic unit 45, joints 55 and 56, and clamp 57 are arranged more rearward than the head tube 21 in the side view of the vehicle, respectively. The primary piping 47 extends forward from the hydraulic unit 45. The primary piping 47 is held by the joints 55 and 56 and clamp 57. Each of the sites of the primary piping 47 held by the joints 55 and 56 and clamp 57 is immovable relative to the body frame 3. One end of the primary piping 47 connected to the hydraulic unit 45 is also immovable relative to the body frame 3.

Each of the joints 75-77 is located more rearward than the head tube 21 in the side view of the vehicle. The secondary piping 49 extends forward from the hydraulic unit 45. The secondary piping 49 is held by the joints 75-77. Each site of the secondary piping 49 held by the joints 75-77 is immovable relative to the body frame 3. One end of the secondary piping 49 connected to the hydraulic unit 45 is also immovable relative to the body frame 3.

Reference is made to Fig. 4. The clamp 57 is located more leftward than the vehicle center line C in the front view of the vehicle. The joint 77 is located more rightward than the vehicle center line C in the front view of the vehicle. When the steering device 4 is in neutral position, the master cylinder 42 is located more rightward than the vehicle center line C in the front view of the vehicle. When the steering device 4 is in neutral position, the clamps 78 and 79, guide 80, brake caliper 44, and brake disc 43 are located more leftward than the vehicle center line C, respectively.

The above arrangement can also be described as follows. A right area AR and a left area AL are defined as follows. The right area AR is an area more rightward than the vehicle center line C in the front view of the vehicle. The left area AL is an area more leftward than the vehicle center line C in the front view of the vehicle. The clamp 57 is located in the left area AL. The joint 77 is located in the right area AR. When the steering device 4 is in neutral position, the master cylinder 42 is located in the right area AR. When the steering device 4 is in neutral position, the clamps 78 and 79, guide 80, brake caliper 44, and brake disc 43 are located in the left area AL, respectively.

A right opening BR and a left opening BL are defined as follows. The right opening BR is an opening demarcated by the head tube 21, right front fork 33R, upper bracket 31, and under bracket 32. The left opening BL is an opening demarcated by the head tube 21, left front fork 33L, upper bracket 31, and under bracket 32. More strictly, the right opening BR, in the front view of the vehicle, is an area more rightward than a right edge of the head tube 21, more leftward than a left edge of the right front fork 33R, lower than a lower edge of the upper bracket 31, and higher than an upper edge of the under bracket 32. The left opening BL, in the front view of the vehicle, is an area more leftward than a left edge of the head tube 21, more rightward than a right edge of the left front fork 33L, lower than the lower edge of the upper bracket 31, and higher than the upper edge of the under bracket 32. The right opening BR corresponds to an opening in the right area AR. The left opening BL corresponds to an opening in the right area AL.

The primary piping 47 extends forward from the clamp 57. The primary piping 47 passes through the left opening BL. By passing through the left opening BL, the primary piping 47 extends from an area more rearward than the head tube 21 to an area more forward than the head tube 21. After passing through the left opening BL, the primary piping 47 extends upward and rightward. And the primary piping 47 reaches the master cylinder 42. The other end of the primary piping 47 connected to the master cylinder 42 is immovable relative to the upper device 4a.

The secondary piping 49 extends forward from the joint 77. The secondary piping 49 passes through the right opening BR. By passing through the right opening BR, the secondary piping 49 extends from the area more rearward than the head tube 21 to the area more forward than the head tube 21. After passing through the right opening BR, the secondary piping 49 extends leftward and reaches a position more leftward than the head tube 21. Further the secondary piping 49 extends rearward and passes through the left opening BL. By passing through the left opening BL, the secondary piping 49 extends from the area more forward than the head tube 21 to the area more rearward than the head tube 21 (strictly, the left front fork 33L). After passing through the left opening BL, the secondary piping 49 is held by the clamp 78. The site where the secondary piping 49 is held by the clamp 78 is immovable relative to the upper device 4a.

The secondary piping 49 extends downward from the clamp 78. The secondary piping 49 passes through the guide 80 and is held by the clamp 79. The site where the secondary piping 49 is held by the clamp 79 is immovable relative to the lower device 4b. The secondary piping 49 extends further downward from the clamp 79. And the secondary piping 49 reaches the brake caliper 44. The other end of the secondary piping 49 connected to the brake caliper 44 is also immovable relative to the lower device 4b.

Here, the portion of the primary piping 47 ranging from the clamp 57 to the master cylinder 42 is called the "first flexible portion". The portion of the secondary piping 49 ranging from the joint 77 to the clamp 78 is called the "second flexible portion". The portion of the secondary piping 49 ranging from the clamp 78 to the brake caliper 44 is called the "most downstream portion". The portion of the secondary piping 49 ranging from the clamp 78 to the clamp 79 is called the "third flexible portion". The third flexible portion is a part of the most downstream portion. The second flexible portion and third flexible portion do not substantially overlap each other. That is, the second flexible portion and third flexible portion are substantially different from each other.

The first flexible portion is located in the right area AR and left area AL. The second flexible portion is located in the right area AR and left area AL. The most downstream portion is located only in the left area AL. The most downstream portion is located more rearward than the left front fork 33L in the side view of the vehicle.

When the steering device 4 rotates relative to the body frame 3, the first flexible portion and the second flexible portion bend, respectively. The rotation of the steering device 4 relative to the body frame 3 does not result in bending of the portion of the primary piping 47 except the first flexible portion 47 or the secondary piping 49 except the second flexible portion.

When the right front fork 33R and left front fork 33L extend and contract, the third flexible portion bends. The extension and contraction of the right front fork 33R and left front fork 33L do not result in bending of the entire primary piping 47 or the portion of the secondary piping 49 except the third flexible portion.

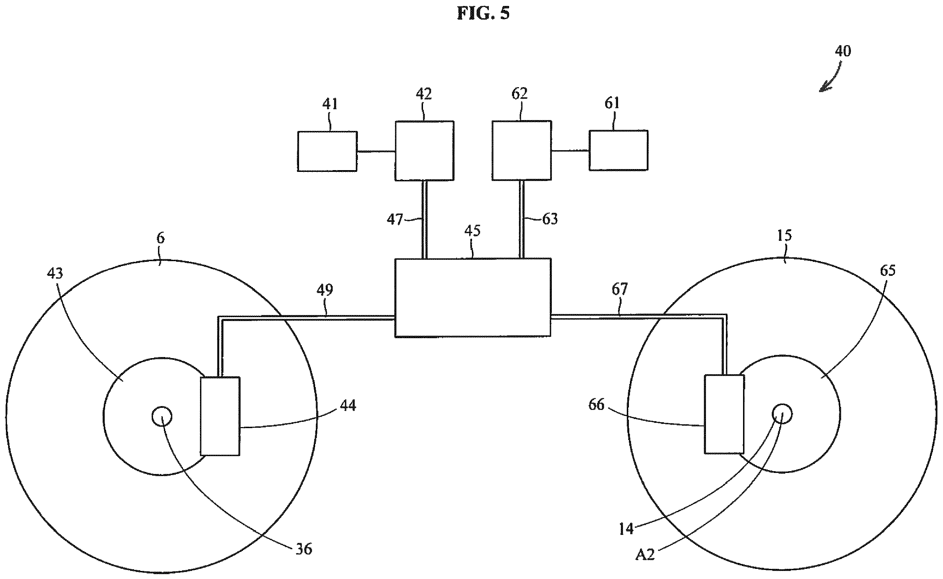

Fig. 5 is a schematic view of the brake system 40. The brake system 40 further brakes the rear wheel 15.

Specifically, the brake system 40 has an input device 61, a master cylinder 62, and primary piping 63. The rider on the straddled vehicle 1 operates the input device 61. The input device 61 is a brake lever or a brake pedal, for example. In response to operation of the input device 61, the master cylinder 62 generates the hydraulic pressure of the brake fluid. The primary piping 63 connects the master cylinder 62 and hydraulic unit 45. The primary piping 63 inputs to the hydraulic unit 45 the hydraulic pressure of the brake fluid generated by the master cylinder 62. The hydraulic unit 45 regulates the hydraulic pressure of the brake fluid. Specifically, the hydraulic unit 45 regulates the hydraulic pressure of the brake fluid generated by the master cylinder 62. For example, the hydraulic unit 45 regulates the hydraulic pressure of the brake fluid to prevent the lock tendency of the rear wheel 15.

The brake system 40 has a brake disc 65, a brake caliper 66, and secondary piping 67. The brake disc 65 is fixedly connected to the rear wheel 15. The brake disc 65 is rotatable with the rear wheel 15 about the rear axle 14 (rotation center N). The brake caliper 66 is supported by the swing arm 13. The brake caliper 66 is immovable relative to the swing arm 13. The brake caliper 66 is hydraulically operable. The brake caliper 66, with the hydraulic pressure of the brake fluid, brakes rotation of the rear wheel 15 about the rear axle 14 (rotation center N). More particularly, the brake caliper 66 applies resistance (specifically, frictional force) to the brake disc 65 (i.e. the rear wheel 15) for braking rotation of the rear wheel 15. That is, the brake caliper 66 brakes the rear wheel 15. The secondary piping 67 connects the hydraulic unit 45 and brake caliper 66 to provide communication therebetween. The secondary piping 67 outputs the hydraulic pressure of the brake fluid regulated by the hydraulic unit 45 to the brake caliper 66. The brake caliper 66 brakes the rear wheel 15 in response to the hydraulic pressure of the brake fluid regulated by the hydraulic unit 45.

The brake caliper 44 is an example of the front brake mechanism in this invention. The brake caliper 66 is an example of the rear brake mechanism in this invention.

### 5. Location of the hydraulic unit

The location of the hydraulic unit 45 will be described in detail. Reference is made to Fig. 1. The hydraulic unit 45 is located more rearward than the swing center M in the side view of the vehicle. The hydraulic unit 45 is located more rearward than the pivot shaft 12 in the side view of the vehicle. The hydraulic unit 45 is located more rearward than the tandem steps 17 in the side view of the vehicle. The hydraulic unit 45 is located more rearward than front ends 16a of the grab bars 16 in the side view of the vehicle. The hydraulic unit 45 is located more rearward than the front end 10c of the seat 10 and more forward than the rear end 10d of the seat 10 in the side view of the vehicle. The hydraulic unit 45 is located more rearward than the front seat 10a in the side view of the vehicle. The hydraulic unit 45 is located more rearward than the boundary K in the side view of the vehicle.

The hydraulic unit 45 is located more forward than the rotation center N in the side view of the vehicle. The hydraulic unit 45 is located more forward than the rear axle 14 in the side view of the vehicle.

Part of the hydraulic unit 45 overlaps the seat 10 in the side view of the vehicle. Part of the hydraulic unit 45 overlaps the rear seat 10b in the side view of the vehicle. The hydraulic unit 45 does not overlap the front seat 10a in the side view of the vehicle. Part of the hydraulic unit 45 overlaps the grab bars 16 in the side view of the vehicle. The hydraulic unit 45 is located above the rear wheel 15 in the side view of the vehicle. The hydraulic unit 45 does not overlap the rear wheel 15 in the side view of the vehicle.

Reference is made to Figs. 2 and 3. The hydraulic unit 45 is located more rearward than the air cleaner 18 in the side view of the vehicle. The hydraulic unit 45 is located in a position higher than the air cleaner 18 in the side view of the vehicle.

The hydraulic unit 45 is located more rearward than a front end 27Ra of the right seat frame 27R and a front end 27La of the left seat frame 27L. The hydraulic unit 45 is located more forward than a rear end 27Rb of the right seat frame 27R and a rear end 27Lb of the left seat frame 27L. In the following description, the front ends 27Ra and 27La, when not distinguished, will be called "front end 27a of the seat frame 27". The rear ends 27Rb and 27Lb, when not distinguished, will be called "rear end 27b of the seat frame 27".

Reference is made to Fig. 3. The hydraulic unit 45 is located leftward of the right seat frame 27R and rightward of the left seat frame 27L in the plan view of the vehicle. The hydraulic unit 45 overlaps the rear fender 19 in the plan view of the vehicle.

Reference is made to Fig. 2. At least part of the hydraulic unit 45 is located above an upper edge 27Lc of the left seat frame 27L in the side view of the vehicle. The hydraulic unit 45 crosses the upper edge 27Lc of the left seat frame 27L in the side view of the vehicle. The hydraulic unit 45 includes an upper portion 46a and a lower portion 46b. The upper portion 46a is located above the upper edge 27Lc of the left seat frame 27L in the side view of the vehicle. The lower portion 46b is located level with or lower than the upper edge 27Lc of the left seat frame 27L in the side view of the vehicle. The lower portion 46b overlaps the left seat frame 27L in the side view of the vehicle. Fig. 2 schematically shows the lower portion 46b in hatches.

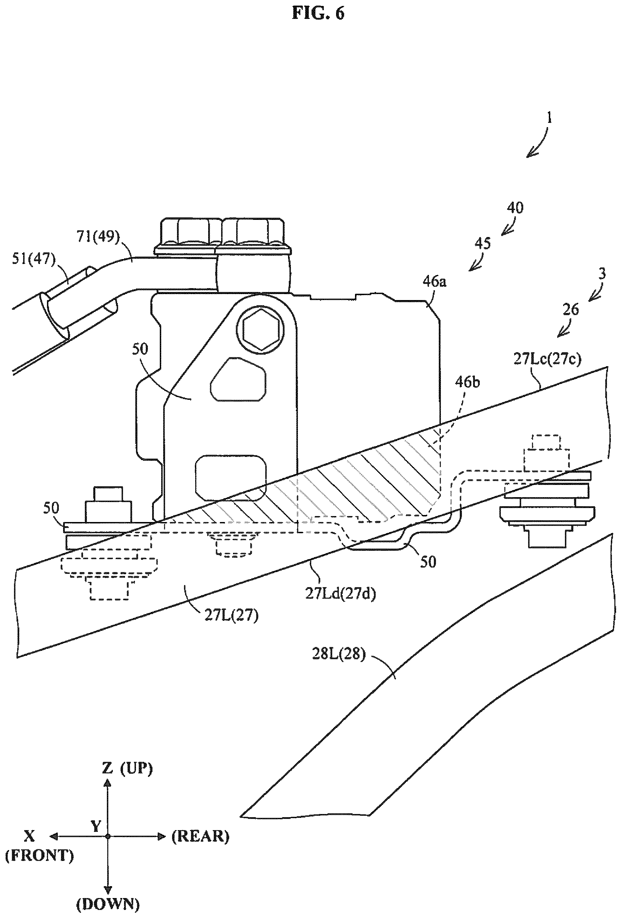

Fig. 6 is a left side view of a portion of the straddled vehicle. Fig. 6 omits illustration of the rear fender 19. The lower portion 46b is located above a lower edge 27Ld of the left seat frame 27L in the side view of the vehicle. The entire hydraulic unit 45 is located above the lower edge 27Ld of the left seat frame 27L in the side view of the vehicle. The hydraulic unit 45 does not cross the lower edge 27Ld of the left seat frame 27L in the side view of the vehicle.

Though not shown, part of the hydraulic unit 45 is located above an upper edge of the right seat frame 27R in the side view of the vehicle. The other portions of the hydraulic unit 45 overlap the right seat frame 27R in the side view of the vehicle. The hydraulic unit 45 is located above a lower edge of the right seat frame 27R in the side view of the vehicle.

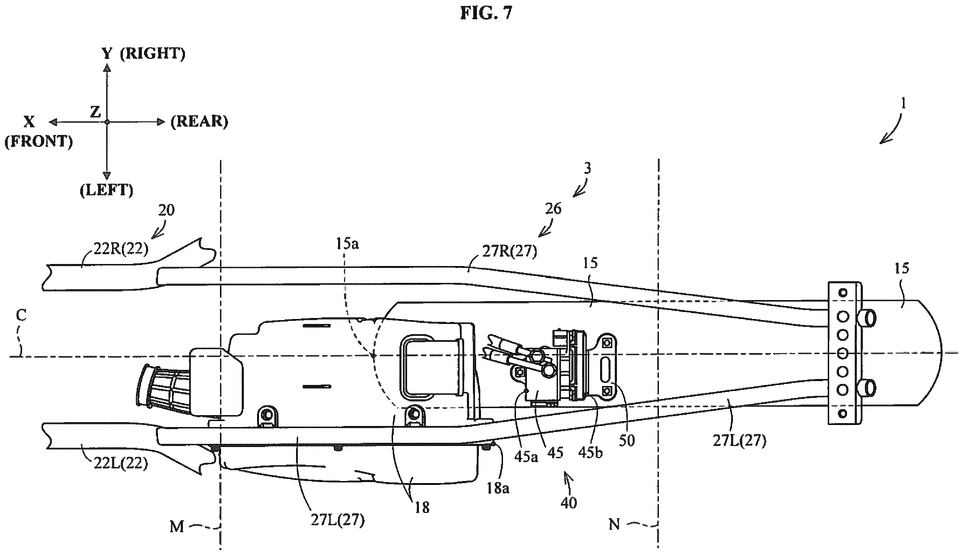

Fig. 7 is a plan view of the portion of the straddled vehicle. The hydraulic unit 45 is located more rearward than the swing center M of the swing arm 13 in the plan view of the vehicle. The hydraulic unit 45 is located more forward than the rotation center N of the rear wheel 15 in the plan view of the vehicle.

The hydraulic unit 45 is located more rearward than a front end 15a of the rear wheel 15 in the plan view of the vehicle. The hydraulic unit 45 has a front end 45a and a rear end 45b. The front end 45a and rear end 45b of the hydraulic unit 45 are located more rearward than the front end 15a of the rear wheel 15, respectively. The hydraulic unit 45 overlaps the rear wheel 15 in the plan view of the vehicle. The hydraulic unit 45 and rear wheel 15 are arranged on the vehicle center line C in the plan view of the vehicle, respectively. That is, the hydraulic unit 45 and rear wheel 15 cross the vehicle center line C in the plan view of the vehicle, respectively.

The hydraulic unit 45 is located more rearward than the air cleaner 18 in the plan view of the vehicle. The front end 45a and rear end 45b of the hydraulic unit 45 are located more rearward than a rear end 18a of the air cleaner 18 in the plan view of the vehicle, respectively. The hydraulic unit 45 does not overlap the air cleaner 18 in the plan view of the vehicle. The air cleaner 18 is located on the vehicle center line C in the plan view of the vehicle.

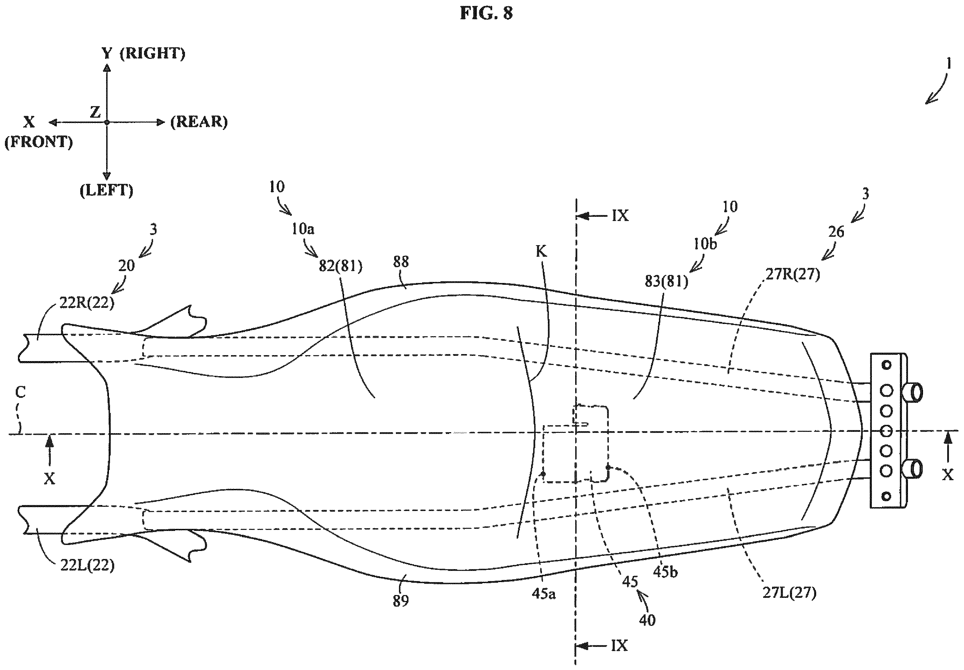

Fig. 8 is a plan view of the portion of the straddled vehicle. The hydraulic unit 45 overlaps the seat 10 in the plan view of the vehicle. The seat 10 is located on the vehicle center line C in the plan view of the vehicle.

The boundary K extends substantially parallel to the transverse direction Y in the plan view of the vehicle. More particularly, the boundary K is curved to bulge rearward in the plan view of the vehicle. The boundary K crosses the vehicle center line C in the plan view of the vehicle. The hydraulic unit 45 is located more rearward than the boundary K in the plan view of the vehicle. The front end 45a and rear end 45b of the hydraulic unit 45 are located more rearward than the boundary K in the plan view of the vehicle, respectively. The hydraulic unit 45 overlaps the rear seat 10b in the plan view of the vehicle. The hydraulic unit 45 does not overlap the front seat 10a in the plan view of the vehicle.

The seat 10 has a seating portion 81. The seating portion 81 extends in the longitudinal direction X from the front seat 10a to the rear seat 10b.

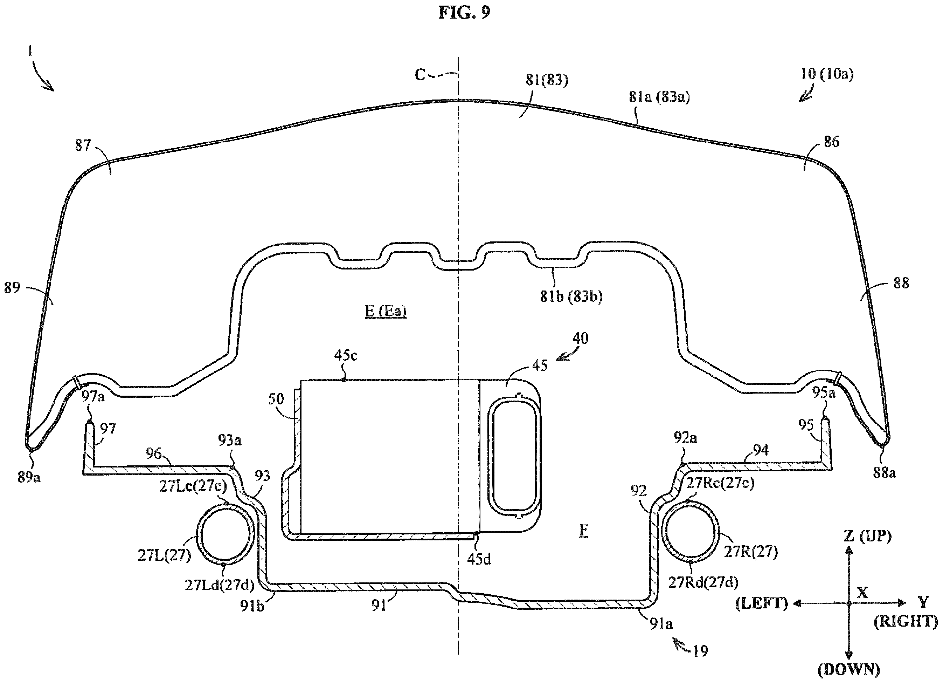

Fig. 9 is a section taken on line IX-IX of Fig. 8. The section shown in Fig. 9 crosses at right angles to the longitudinal direction X. More particularly, the section shown in Fig. 9 passes through the hydraulic unit 45 and extends perpendicular to the longitudinal direction X.

The seating portion 81 has a flat shape. The seating portion 81 includes a right edge 86 and a left edge 87. The seating portion 81 extends in the transverse direction Y between the right edge 86 and left edge 87. The length of the seating portion 81 in the transverse direction Y is larger than the length of the seating portion 81 in the up-down direction Z.

The seating portion 81 includes an upper surface 81a and a back surface 81b. The upper surface 81a contacts the buttocks of the rider and the fellow passenger. The back surface 81b is located below the upper surface 81a.

The seat 10 includes a right wall portion 88 and a left wall portion 89. The right wall portion 88 is connected to the right edge 86 of the seating portion 81. The right wall portion 88 extends downward from the right edge 86 of the seating portion 81. The right wall portion 88 has a lower edge 88a. The left wall portion 89 is connected to the left edge 87 of the seating portion 81. The left wall portion 89 extends downward from the left edge 87 of the seating portion 81. The left wall portion 89 is located leftward of the right wall portion 88. The left wall portion 89 has a lower edge 89a.

The seating portion 81 is located on the vehicle center line C. The right edge 86 and right wall portion 88 are located more rightward than the vehicle center line C, respectively. The lower edge 88a of the right wall portion 88 is located more rightward than the right seat frame 27R. The left edge 87 and left wall portion 89 are located more leftward than the vehicle center line C, respectively. The lower edge 89a of the left wall portion 89 is located more leftward than the left seat frame 27L. The lower edge 88a of the right wall portion 88 and the lower edge 89a of the left wall portion 89 are, respectively, in the section perpendicular to the longitudinal direction X, located in positions higher than an upper edge 27Rc of the right seat frame 27R and an upper edge 27Lc of the left seat frame 27L. In the following description, the upper edges 27Rc and 27Lc, when not distinguished, will be called "upper edge 27c of the seat frame 27".

The seating portion 81, right wall portion 88, and left wall portion 89 demarcate a space E recessed upward. The space E is an area under the back surface 81b of the seating portion 81. Further, the space E is an area leftward of the right wall portion 88 and rightward of the left wall portion 89. The space E is open downward. The space E is located on the vehicle center line C.

Part of the hydraulic unit 45 is located in the space E. More particularly, the hydraulic unit 45 is located below the back surface 81b of the seating portion 81. The hydraulic unit 45 is located leftward of the right wall portion 88 and rightward of the left wall portion 89.

The hydraulic unit 45 has an upper end 45c. The upper end 45c of the hydraulic unit 45 is, in the section perpendicular to the longitudinal direction X, located in a position lower than the back surface 81b of the seating portion 81. The upper end 45c of the hydraulic unit 45 is, in the section perpendicular to the longitudinal direction X, located in a position higher than the lower edge 88a of the right wall portion 88 and the lower edge 89a of the left wall portion 89. The upper end 45c of the hydraulic unit 45 is, in the section perpendicular to the longitudinal direction X, located in a position higher than the upper edge 27c of the seat frame 27.

The hydraulic unit 45 has a lower end 45d. The lower end 45d of the hydraulic unit 45 is, in the section perpendicular to the longitudinal direction X, located in a position lower than the lower edge 88a of the right wall portion 88 and the lower edge 89a of the left wall portion 89. The lower end 45d of the hydraulic unit 45 is, in the section perpendicular to the longitudinal direction X, located in a position lower than the upper edge 27c of the seat frame 27. The lower end 45d of the hydraulic unit 45 is, in the section perpendicular to the longitudinal direction X, located in a position higher than the lower edge 27Rd of the right seat frame 27R and the lower edge 27Ld of the left seat frame 27L. In the following description, the lower edges 27Rd and 27Ld, when not distinguished, will be called "lower edge 27d of the seat frame 27".

The hydraulic unit 45 is located above the rear fender 19 in the section perpendicular to the longitudinal direction X. The rear fender 19 is located below the seating portion 81 in the section perpendicular to the longitudinal direction X. The rear fender 19 is, in the section perpendicular to the longitudinal direction X, located more leftward than the lower edge 88a of the right wall portion 88 and more rightward than the lower edge 89a of the left wall portion 89.

The rear fender 19 includes a bottom portion 91, a right wall portion 92, and a left wall portion 93. The bottom portion 91 is substantially horizontal in the section perpendicular to the longitudinal direction X. The bottom portion 91 includes a right edge 91a and a left edge 91b. The right wall portion 92 is connected to the right edge 91a of the bottom portion 91. The right wall portion 92 extends upward from the right edge 91a of the bottom portion 91. The right wall portion 92 has an upper edge 92a. The left wall portion 93 is connected to the left edge 91b of the bottom portion 91. The left wall portion 93 extends upward from the left edge 91b of the bottom portion 91. The left wall portion 93 is located leftward of the right wall portion 92. The left wall portion 93 has an upper edge 93a.

The bottom portion 91 is located on the vehicle center line C. The right wall portion 92 is located more rightward than the vehicle center line C. The left wall portion 93 is located more leftward than the vehicle center line C. The bottom portion 91, right wall portion 92, and left wall portion 93 are located more leftward than the right seat frame 27R, and more rightward than the left seat frame 27L.

The bottom portion 91 is, in the section perpendicular to the longitudinal direction X, located in a position lower than the lower edge 27d of the seat frame 27. The upper edge 92a of the right wall portion 92 and the upper edge 93a of the left wall portion 93 are, in the section perpendicular to the longitudinal direction X, located in positions higher than the upper edge 27c of the seat frame 27. The upper edge 92a of the right wall portion 92 and the upper edge 93a of the left wall portion 93 are, in the section perpendicular to the longitudinal direction X, located in positions lower than the lower edge 88a of the right wall portion 88 and the lower edge 89a of the left wall portion 89.

The bottom portion 91, right wall portion 92, and left wall portion 93 demarcate a space F recessed downward. The space F is an area above the bottom portion 91. Further, the space F is an area leftward of the right wall portion 92 and rightward of the left wall portion 93. The space F is open upward. The space F is located on the vehicle center line C. The space F is located below the space E.

Part of the hydraulic unit 45 is located in the space F. More particularly, the hydraulic unit 45 is located above the bottom portion 91. The hydraulic unit 45 is located leftward of the right wall portion 92 and rightward of the left wall portion 93. The hydraulic unit 45 overlaps the bottom portion 91 in the plan view of the vehicle (see Fig. 3).

The upper end 45c of the hydraulic unit 45 is, in the section perpendicular to the longitudinal direction X, located in a position higher than the upper edge 92a of the right wall portion 92 and the upper edge 93a of the left wall portion 93. The lower end 45d of the hydraulic unit 45 is, in the section perpendicular to the longitudinal direction X, located in a position lower than the upper edge 92a of the right wall portion 92 and the upper edge 93a of the left wall portion 93, and higher than the bottom portion 91.

The rear fender 19 includes a right flange portion 94, a right outer wall portion 95, a left flange portion 96, and a left outer wall portion 97. The right flange portion 94 is connected to the upper edge 92a of the right wall portion 92. The right flange portion 94 extends rightward from the upper edge 92a of the right wall portion 92. The right outer wall portion 95 is connected to a right edge of the right flange portion 94. The right outer wall portion 95 extends upward from the right edge of the right flange portion 94. The right outer wall portion 95 has an upper edge 95a. The left flange 96 is connected to the upper edge 93a of the left wall portion 93. The left flange portion 96 extends leftward from the upper edge 93a of the left wall portion 93. The left outer wall portion 97 is connected to the left edge of the left flange portion 96. The left outer wall portion 97 extends upward from the left edge of the left flange portion 96. The left outer wall portion 97 has an upper edge 97a.

The right flange portion 94 is, in the section perpendicular to the longitudinal direction X, located in a position higher than the upper edge 27Rc of the right seat frame 27R. The right outer wall portion 95 is, in the section perpendicular to the longitudinal direction X, located more rightward than the right seat frame 27R and more leftward than the lower edge 88a of the right wall portion 88. The upper edge 95a of the right outer wall portion 95 is, in the section perpendicular to the longitudinal direction X, located in a position higher than the lower edge 88a of the right wall portion 88. The upper edge 95a of the right outer wall portion 95 is, in the section perpendicular to the longitudinal direction X, located in a position lower than the upper end 45c of the hydraulic unit 45. The left flange portion 96 is, in the section perpendicular to the longitudinal direction X, located in a position higher than the upper edge 27Lc of the left seat frame 27L. The left outer wall portion 97 is, in the section perpendicular to the longitudinal direction X, located more leftward than the left seat frame 27L and more rightward than the lower edge 89a of the left wall portion 89. The upper edge 97a of the left outer wall portion 97 is, in the section perpendicular to the longitudinal direction X, located in a position higher than the lower edge 89a of the left wall portion 89. The upper edge 97a of the left outer wall portion 97 is, in the section perpendicular to the longitudinal direction X, located in a position lower than the upper end 45c of the hydraulic unit 45.

Reference is made to Fig. 8. The seating portion 81 includes a front seating portion 82 and a rear seating portion 83. The front seating portion 82 is an element of the front seat 10a. The front seating portion 82 contacts the rider's buttocks. The rear seating portion 83 is an element of the rear seat 10b. The rear seating portion 83 contacts the fellow passenger's buttocks. The rear seating portion 83 is located more rearward than the front seating portion 82 in the plan view of the vehicle. The boundary K is located between the front seating portion 82 and rear seating portion 83. That is, the boundary K corresponds to a boundary between the front seating portion 82 and rear seating portion 83. The front seating portion 82 and rear seating portion 83 adjoin each other at the boundary K. The boundary K corresponds to a rear end of the front seating portion 82, and corresponds to a front end of the rear seating portion 83.

The front end 45a and rear end 45b of the hydraulic unit 45 are, in the plan view of the vehicle, located more rearward than the boundary K between the front seating portion 82 and rear seating portion 83, respectively. The hydraulic unit 45 is located more rearward than the front seating portion 82 in the plan view of the vehicle. The hydraulic unit 45 does not overlap the front seating portion 82 in the plan view of the vehicle. The hydraulic unit 45 overlaps the rear seating portion 83 in the plan view of the vehicle.

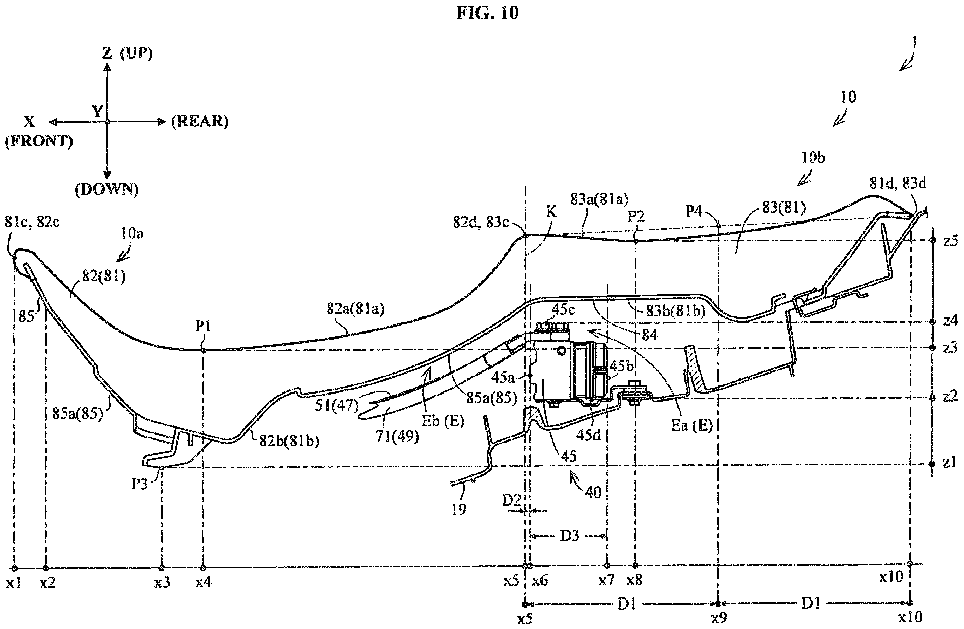

Fig. 10 is a section taken on line X-X of Fig. 8. The section shown in Fig. 10 is perpendicular to the transverse direction Y. More particularly, the section shown in Fig. 10 includes the vehicle center line C, and crosses the transverse direction Y at right angles thereto. Fig. 10 shows, for convenience, the hydraulic unit 45 and other parts as seen from a side.

The hydraulic unit 45 is located below the back surface 81b of the seating portion 81.

The front seating portion 82 has an upper surface 82a and a back surface 82b. The rear seating portion 83 has an upper surface 83a and a back surface 83b. The upper surfaces 82a and 83a are elements of the upper surface 81a of the seating portion 81, respectively. The back surfaces 82b and 83b are elements of the back surface 81b of the seating portion 81, respectively. The above can also be stated as follows. That is, the upper surface 81a of the seating portion 81 includes the upper surface 82a of the front seating portion 82, and the upper surface 83a of the rear seating portion 83. The back surface 81b of the seating portion 81 includes the back surface 82b of the front seating portion 82, and the back surface 83b of the rear seating portion 83.

The seating portion 81 has a front end 81c and a rear end 81d. The front seating portion 82 has a front end 82c and a rear end 82d. The rear seating portion 83 has a front end 83c and a rear end 83d. The front end 81c is in the same position as the front end 82c. The rear end 81d is in the same position as the rear end 83d. The rear end 82d is in the same position as the front end 83c. Fig. 10 shows X-coordinate x1 of the front end 81c (front end 82c) in the section perpendicular to the transverse direction Y. Fig. 10 shows X-coordinate x5 of the rear end 82d (front end 83c) in the section perpendicular to the transverse direction Y. Fig. 10 shows X-coordinate x10 of the rear end 81d (rear end 83d) in the section perpendicular to the transverse direction Y. The X-coordinates are coordinates in the longitudinal direction X.

The upper surface 82a of the front seating portion 82 is curved to bulge down-ward in the section perpendicular to the transverse direction Y. The upper surface 82a of the front seating portion 82 includes a lowest point P1 in the section perpendicular to the transverse direction Y. The upper surface 83a of the rear seating portion 83 is substantially horizontal in the section perpendicular to the transverse direction Y. Strictly, the upper surface 83a of the rear seating portion 83 is also curved to bulge downward in the section perpendicular to the transverse direction Y. The upper surface 83a of the rear seating portion 83 includes a lowest point P2 in the section perpendicular to the transverse direction Y. Fig. 10 shows Z-coordinate z3 of the lowest point P1 in the section perpendicular to the transverse direction Y, and Z-coordinate z5 of the lowest point P2 in the section perpendicular to the transverse direction Y. The Z-coordinates are coordinates in the up-down direction Z. The lowest point P1 is lower than the lowest point P2. The lowest point P1 corresponds to the lowest point of the entire upper surface 81a of the seating portion 81. In the following description, the lowest point P1 will be called as appropriate "the lowest point P1 of the upper surface 81a of the seating portion 81".

The back surface 82b of the front seating portion 82 is curved to bulge down-ward in the section perpendicular to the transverse direction Y. The back surface 82a of the front seating portion 82 extends forward and downward from the rear end 82d of the front seating portion 82 in the section perpendicular to the transverse direction Y. The back surface 82b of the front seating portion 82 includes a lowest point P3 in the section perpendicular to the transverse direction Y. Fig. 10 shows Z-coordinate z1 of the lowest point P3 in the section perpendicular to the transverse direction Y. The back surface 83b of the rear seating portion 83 extends rearward and substantially horizontally from the front end 83c of the rear seating portion 83 in the section perpendicular to the transverse direction Y. The back surface 83b of the rear seating portion 83 is, in the section perpendicular to the transverse direction Y, located in a position higher than the lowest point P3. Thus, the back surface 83b of the rear seating portion 83 is, in the section perpendicular to the transverse direction Y, located in a position one stage higher than the back surface 82a of the front seating portion 82. The lowest point P3 corresponds to the lowest point of the entire back surface 81b of the seating portion 81. In the following description, the lowest point P3 will be called as appropriate "the lowest point P3 of the back surface 81b of the seating portion 81".

The hydraulic unit 45 is located below the back surface 83b of the rear seating portion 83. The front end 45a and rear end 45b of the hydraulic unit 45 are, in the section perpendicular to the transverse direction Y, located more rearward than the front end 83c of the rear seating portion 83 and more forward than the rear end 83d of the rear seating portion 83, respectively. Fig. 10 shows X-coordinate x6 of the front end 45a in the section perpendicular to the transverse direction Y, and X-coordinate x7 of the rear end 45b in the section perpendicular to the transverse direction Y.

The hydraulic unit 45 is located in a position spaced away from under the back surface 82b of the front seating portion 82. The front end 45a and rear end 45b of the hydraulic unit 45 are located more rearward than the rear end 82d of the front seating portion 82, respectively, in the section perpendicular to the transverse direction Y.

The hydraulic unit 45 is, in the section perpendicular to the transverse direction Y, located more rearward than the lowest point P1 of the upper surface 81a of the seating portion 81. The hydraulic unit 45 is, in the section perpendicular to the transverse direction Y, located more rearward than the lowest point P3 of the back surface 81b of the seating portion 81. Fig. 10 shows X-coordinate x3 of the lowest point P3 in the section perpendicular to the transverse direction Y, and X-coordinate x4 of the lowest point P1 in the section perpendicular to the transverse direction Y.

The hydraulic unit 45 is, in the section perpendicular to the transverse direction Y, located more forward than a middle point P4 between the front end 83c of the rear seating portion 83 and the rear end 83d of the rear seating portion 83. The middle point P4 is, in the section perpendicular to the transverse direction Y, located on the center line in the longitudinal direction X of the rear seating portion 83. Fig. 10 shows X-coordinate x9 of the middle point P4 in the section perpendicular to the transverse direction Y. A difference D1 between X-coordinate x9 and X-coordinate x5 is equal to a difference D1 between X-coordinate x9 and X-coordinate x10.

The hydraulic unit 45 is, in the section perpendicular to the transverse direction Y, located more forward than the lowest point P2 of the upper surface 83a of the rear seating portion 83. Fig. 10 shows X-coordinate x8 of the lowest point P2 in the section perpendicular to the transverse direction Y.

The hydraulic unit 45 is, in the section perpendicular to the transverse direction Y, located in a position close to the front end 83c of the rear seating portion 83. The hydraulic unit 45 is, in the section perpendicular to the transverse direction Y, located in a position close to the boundary K between the front seating portion 82 and rear seating portion 83. A distance D2 in the longitudinal direction X between the front end 83c of the rear seating portion 83 and the front end 45a of the hydraulic unit 45 is sufficiently small. The distance D2 is a difference between X-coordinate x5 and X-coordinate x6. For example, the distance D2 is smaller than a length D3 in the longitudinal direction X of the hydraulic unit 45. The length D3 is a difference between X-coordinate x6 and X-coordinate x7.

The upper end 45c and lower end 45d of the hydraulic unit 45 are, in the section perpendicular to the transverse direction Y, located in positions higher than the lowest point P3 of the back surface 81b of the seating portion 81, respectively. Fig. 10 shows Z-coordinate z4 of the upper end 45c in the section perpendicular to the transverse direction Y, and Z-coordinate z2 of the lower end 45d in the section perpendicular to the transverse direction Y.

The upper end 45c of the hydraulic unit 45 is, in the section perpendicular to the transverse direction Y, located in a position higher than the lowest point P1 of the upper surface 81a of the seating portion 81. The lower end 45d of the hydraulic unit 45 is, in the section perpendicular to the transverse direction Y, located in a position lower than the lowest point P1 of the upper surface 81a of the seating portion 81.

The upper end 45c and lower end 45d of the hydraulic unit 45 are, in the section perpendicular to the transverse direction Y, located in positions lower than the lowest point P2 of the upper surface 83a of the rear seating portion 83b, respectively.

The positional relationship between the hydraulic unit 45 and the back surface 81b of the seating portion 81 will be described from a different viewpoint.

The back surface 81b of the seating portion 81 includes a first portion 84 located more rearward than the front end 45a of the hydraulic unit 45 and more forward than the rear end 45b of the hydraulic unit 45. The first portion 84 is located more rearward than X-coordinate x6 and more forward than X-coordinate x7. X-coordinate x6 corresponds to the X-coordinate of the front end of the first portion 84. X-coordinate x7 corresponds to the X-coordinate of the rear end of the first portion 84.

The first portion 84 is located more rearward than the front end 83c of the rear seating portion 83. The entire first portion 84 is included in the back surface 83b of the rear seating portion 83.

The first portion 84 is substantially horizontal in the section perpendicular to the transverse direction Y. The first portion 84 is, in the section perpendicular to the trans-verse direction Y, located in a position higher than the lowest point P3 of the back surface 81b of the seating portion 81. The first portion 84 is, in the section perpendicular to the transverse direction Y, located in a position higher than the lowest point P1 of the upper surface 81a of the seating portion 81.

The back surface 81b of the seating portion 81 includes a second portion 85 located more forward than the first portion 84. The second portion 85 is, in the section perpendicular to the transverse direction Y, located more rearward than the front end 81c of the seating portion 81 and more forward than the front end 45a of the hydraulic unit 45. The second portion 85 is located more rearward than X-coordinate x1 and more forward than X-coordinate x6. X-coordinate x6 corresponds to the X-coordinate of the rear end of the second portion 85.

The second portion 85 includes a low part 85a located in a position lower than the first portion 84 in the section perpendicular to the transverse direction Y. In Fig. 10, the low part 85a is located, for example, more rearward than X-coordinate x2 and more forward than X-coordinate x6. The low part 85a includes the rear end of the second portion 85. The low part 85a extends forward and downward from the rear end of the second portion 85.

The space E noted hereinbefore includes a space Ea located below the first portion 84 and a space Eb located below the second portion 85. The space Ea is located more rearward than X-coordinate x6 and more forward than X-coordinate x7. The space Eb is located more rearward X-coordinate x1 and more forward than X-coordinate x6. The hydraulic unit 45 is located in the space Ea. The hydraulic unit 45 is not located in the space Eb. Strictly, the space E shown in Fig. 9 corresponds to the space Ea.

Since the second portion 85 includes the low part 85a, the space Ea is higher than the space Eb. That is, the space Ea is larger than the space Eb.

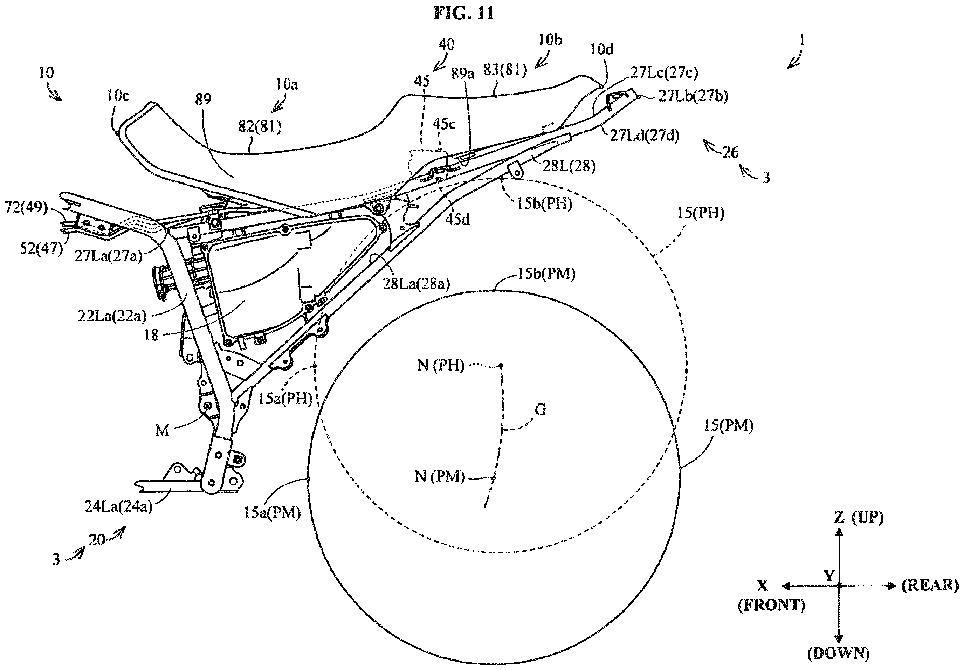

Fig. 11 is a left side view of a portion of the straddled vehicle. The left wall portion 89 extends in the longitudinal direction X from the front seat 10a to the rear seat 10b. That is, the left wall portion 89 is connected to the front seating portion 82 and rear seating portion 83. The right wall portion 88 has the same construction and shape as the left wall portion 89 except for being symmetric.

The hydraulic unit 45 crosses the lower edge 89a of the left wall portion 89 in the side view of the vehicle. The upper end 45c of the hydraulic unit 45 is located above the lower edge 89a of the left wall portion 89 in the side view of the vehicle. The upper end 45c of the hydraulic unit 45 overlaps the left wall portion 89 in the side view of the vehicle. The lower end 45d of the hydraulic unit 45 is located below the lower edge 89a of the left wall portion 89 in the side view of the vehicle. Though not shown, the hydraulic unit 45 crosses the lower edge 88a of the right wall portion 88 in the side view of the vehicle. The upper end 45c of the hydraulic unit 45 is located above the lower edge 88a of the right wall portion 88 in the side view of the vehicle. The upper end 45c of the hydraulic unit 45 overlaps the right wall portion 88 in the side view of the vehicle. The lower end 45d of the hydraulic unit 45 is located below the lower edge 88a of the right wall portion 88 in the side view of the vehicle.

Fig. 11 schematically shows the rear wheel 15 located in a middle position PM in a solid line. Fig. 11 schematically shows the rear wheel 15 located in a high position PH in a broken line. The high position PH is located above the middle position PM. The middle position PM is substantially the same as the position of the rear wheel 15 shown in Fig. 1.

With swinging of the swing arm 13 relative to the body frame 3, the rear wheel 15 is movable to the middle position PM and high position PH. More particularly, the rotation center N of the rear wheel 15 can turn along an imaginary arc G centering on the swing center M in the side view of the vehicle.

A region where the rear wheel 15 is movable relative to the body frame 3 is called "the movable region of the rear wheel 15". The high position PH is the highest position in the movable region of the rear wheel 15.

When the rear wheel 15 is in the high position PH, part of the rear wheel 15 is located above an upper edge 28La of the left back stay 28L in the side view of the vehicle. When the rear wheel 15 is in the high position PH, the rear wheel 15 crosses the upper edge 28La of the left back stay 28L in the side view of the vehicle.

Though not shown, when the rear wheel 15 is in the high position PH, part of the rear wheel 15 is located above an upper edge of the right back stay 28R in the side view of the vehicle. When the rear wheel 15 is in the high position PH, the rear wheel 15 crosses the upper edge of the right back stay 28R in the side view of the vehicle. When the upper edge 28La of the left back stay 28L and the upper edge of the right back stay 28R are not distinguished hereinafter, the term "upper edge 28a of the back stay 28" will be used. The movable region of the rear wheel 15 reaches an area above the upper edge 28a of the back stay 28 in the side view of the vehicle.

When the rear wheel 15 is in the middle position PM, the rear wheel 15 is located below the upper edge 28a of the back stay 28 in the side view of the vehicle. When the rear wheel 15 is in the middle position PM, the rear wheel 15 does not cross the upper edge 28a of the back stay 28 in the side view of the vehicle.

When the rear wheel 15 is both in the high position PH and in the middle position PM, the rear wheel 15 is located below the lower edge 27d of the seat frame 27 in the side view of the vehicle. When the rear wheel 15 is both in the high position PH and in the middle position PM, the rear wheel 15 does not cross the lower edge 27d of the seat frame 27 in the side view of the vehicle. The entire rear wheel 15 is always located below the lower edge 27d of the seat frame 27 in the side view of the vehicle. The movable region of the rear wheel 15 is located below the lower edge 27d of the seat frame 27 in the side view of the vehicle.

The hydraulic unit 45 is located in a position spaced from the movable region of the rear wheel 15 in the side view of the vehicle. When the rear wheel 15 is both in the high position PH and in the middle position PM, the hydraulic unit 45 does not overlap the rear wheel 15 in the side view of the vehicle.

When the rear wheel 15 is both in the high position PH and in the middle position PM, the hydraulic unit 45 is located more rearward than the front end 15a of the rear wheel 15 in the side view of the vehicle. When the rear wheel 15 is both in the high position PH and in the middle position PM, the hydraulic unit 45 is located more forward than the rotation center N in the side view of the vehicle. When the rear wheel 15 is both in the high position PH and in the middle position PM, the hydraulic unit 45 is located more forward than the upper end 15b of the rear wheel 15 in the side view of the vehicle.

When the rear wheel 15 is in the high position PH, the upper end 15b of the rear wheel 15 is located in substantially the same height position as the lower end 45d of the hydraulic unit 45.

### 6. Advantageous effects

The straddled vehicle 1 according to this embodiment provides the following effects.

The hydraulic unit 45 is located more rearward than the swing center M in the side view and plan view of the vehicle. The hydraulic unit 45 can therefore be conveniently inhibited from influencing the shapes and arrangements of the members other than the hydraulic unit 45 (hereinafter called "the other members"). In particular, its influence is conveniently inhibited from being exerted on the other members (e.g. the engine 8 and fuel tank 9) located more forward than the swing center M in the side view of the vehicle. For example, design changes to the shapes, arrangements, or positions of the other members can be inhibited. Further, it is easy to locate the hydraulic unit 45 appropriately. For example, design changes to the shape, location, or posture of the hydraulic unit 45 itself can be inhibited.

The hydraulic unit 45 is located more forward than the rotation center N in the side view of the vehicle. The primary piping 47 and secondary piping 49 can therefore be prevented from becoming very long. This can inhibit the influence of the hydraulic unit 45 on the other members. Particularly, its influence is conveniently inhibited from being exerted on the primary piping 47, secondary piping 49, and the members arranged adjacent thereto.

The upper portion 46a of the hydraulic unit 45 is located above the upper edge 27c of the seat frame 27 in the side view of the vehicle. The hydraulic unit 45 can therefore be conveniently prevented from interfering with the rear wheel 15, although the hydraulic unit 45 is located more rearward than the swing center M of the swing arm 13 and more forward than the rotation center N of the rear wheel 15 in the side view of the vehicle.

According to the straddled vehicle 1, as noted above, the hydraulic unit 45 can be located appropriately, while inhibiting the hydraulic unit 45 from influencing the other members.

The hydraulic unit 45 is located more rearward than the front end 15a of the rear wheel 15 in the side view and plan view of the vehicle. The hydraulic unit 45 can therefore be located more appropriately, while further inhibiting the influence of the hydraulic unit 45 on the other members.

The hydraulic unit 45 is located more rearward than the tandem steps 17 in the side view of the vehicle. The hydraulic unit 45 can therefore be located more appropriately, while further inhibiting the influence of the hydraulic unit 45 on the other members.

The hydraulic unit 45 is located more rearward than the front ends 16a of the grab bars 16 in the side view of the vehicle. The hydraulic unit 45 can therefore be located more appropriately, while further inhibiting the influence of the hydraulic unit 45 on the other members.

The hydraulic unit 45 overlaps the seat 10 in the plan view of the vehicle. Here, the seat 10 is located in a middle part of the straddled vehicle 1 in the transverse direction Y. Specifically, the seat 10 is located on the vehicle center line C in the plan view of the vehicle. Consequently, the hydraulic unit 45 is also located in the middle part of the straddled vehicle 1 in the transverse direction Y. The hydraulic unit 45 can therefore be conveniently inhibited from wobbling in the transverse direction Y. That is, the hydraulic unit 45 can be located more conveniently.

The hydraulic unit 45 overlaps the rear wheel 15 in the plan view of the vehicle. Here, the rear wheel 15 is located in a middle part of the straddled vehicle 1 in the trans-verse direction Y. Specifically, the rear wheel 15 is located on the vehicle center line C in the plan view of the vehicle. Consequently, the hydraulic unit 45 is also located in the middle part of the straddled vehicle 1 in the transverse direction Y. The hydraulic unit 45 can therefore be conveniently inhibited from wobbling in the transverse direction Y. That is, the hydraulic unit 45 can be located more conveniently.

The hydraulic unit 45 is located below the back surface 81 b of the seating portion 81. The hydraulic unit 45 overlaps the seating portion 81 in the plan view of the vehicle. The hydraulic unit 45 can therefore be conveniently protected by the seating portion 81.

The hydraulic unit 45 is located below the back surface 83b of the rear seating portion 83. The hydraulic unit 45 overlaps the rear seating portion 83 in the plan view of the vehicle. The hydraulic unit 45 can therefore be conveniently protected by the rear seating portion 83.

The hydraulic unit 45 is located in a position spaced from under the back surface 82b of the front seating portion 82. The hydraulic unit 45 does not overlap the front seating portion 82 in the plan view of the vehicle. This can conveniently prevent an impairment of the seating comfort of the front seating portion 82.

The rear end 45b of the hydraulic unit 45 is, in the plan view of the vehicle, located more rearward than the boundary K between the front seating portion 82 and rear seating portion 83. This can easily secure an installation space for the hydraulic unit 45. Further, it can conveniently prevent an impairment of the seating comfort of the front seating portion 82.

The front end 45a of the hydraulic unit 45 is, in the plan view of the vehicle, located more rearward than the boundary K between the front seating portion 82 and rear seating portion 83. That is, the entire hydraulic unit 45 is located more rearward than the boundary K in the plan view of the vehicle. This can more easily secure an installation space for the hydraulic unit 45. Further, it can more conveniently prevent an impairment of the seating comfort of the front seating portion 82.

The hydraulic unit 45 is, in the section perpendicular to the transverse direction Y, located more forward than the middle point P4 between the front end 83c and the rear end 83d of the rear seating portion 83. This can conveniently prevent a lowering of the seating comfort of the rear seating portion 83.

The hydraulic unit 45 is, in the section perpendicular to the transverse direction Y, located more forward than the lowest point P2 of the upper surface 83a of the rear seating portion 83. This can effectively prevent a lowering of the seating comfort of the rear seating portion 83.

The hydraulic unit 45 is, in the section perpendicular to the transverse direction Y, located close to the front end 83c of the rear seating portion 83. This can conveniently prevent a lowering of the seating comfort of the rear seating portion 83.

The hydraulic unit 45 is, in the section perpendicular to the transverse direction Y, located close to the boundary K between the front seating portion 82 and rear seating portion 83. This can effectively prevent a lowering of the seating comfort of the rear seating portion 83.

The hydraulic unit 45 is, in the section perpendicular to the transverse direction Y, located more rearward than the lowest point P1 of the upper surface 81a of the seating portion 81. This can more easily secure an installation space for the hydraulic unit 45.

The hydraulic unit 45 is, in the section perpendicular to the transverse direction Y, located more rearward than the lowest point P3 of the back surface 81b of the seating portion 81. This can more easily secure an installation space for the hydraulic unit 45.

The upper end 45c of the hydraulic unit 45 is, in the section perpendicular to the transverse direction Y, located in a position higher than the lowest point P3 of the back surface 81b of the seating portion 81. According to this arrangement, the hydraulic unit 45 is located in a relatively high position. The hydraulic unit 45 can therefore be more conveniently prevented from interfering with the rear wheel 15.

The upper end 45c of the hydraulic unit 45 is, in the section perpendicular to the transverse direction Y, located in a position higher than the lowest point P1 of the upper surface 81a of the seating portion 81. According to this arrangement, the hydraulic unit 45 is located in a relatively high position. The hydraulic unit 45 can therefore be more conveniently prevented from interfering with the rear wheel 15.

The lower end 45d of the hydraulic unit 45 is, in the section perpendicular to the transverse direction Y, located in a position higher than the lowest point P3 of the back surface 81b of the seating portion 81. According to this arrangement, the hydraulic unit 45 is located in a relatively high position. The hydraulic unit 45 can therefore be more conveniently prevented from interfering with the rear wheel 15.

The hydraulic unit 45 is located below the back surface 81b of the seating portion 81. Further, the hydraulic unit 45 is located more leftward than the right wall portion 88 and more rightward than the left wall portion 89. That is, the space E is used as installation space of the hydraulic unit 45. The hydraulic unit 45 can therefore be located appropriately, while inhibiting the influence of the hydraulic unit 45 on the other members. Further, the hydraulic unit 45 can be conveniently protected by the right wall portion 88 and left wall portion 89.

The upper end 45c of the hydraulic unit 45 is, in the section perpendicular to the transverse direction Y, located in a position higher than the lower edge 88a of the right wall portion 88 and the lower edge 89a of the left wall portion 89. According to this arrangement, the hydraulic unit 45 is located in a relatively high position. The hydraulic unit 45 can therefore be more conveniently prevented from interfering with the rear wheel 15.

The upper end 45c of the hydraulic unit 45 is, in the section perpendicular to the longitudinal direction X, located in a position higher than the upper edge 27c of the seat frame 27. According to this arrangement, the hydraulic unit 45 is located in a relatively high position. The hydraulic unit 45 can therefore be more conveniently prevented from interfering with the rear wheel 15.

The lower end 45d of the hydraulic unit 45 is, in the section perpendicular to the longitudinal direction X, located in a position higher than the lower edge 27d of the seat frame 27. According to this arrangement, the hydraulic unit 45 is located in a relatively high position. The hydraulic unit 45 can therefore be more conveniently prevented from interfering with the rear wheel 15.

The lower end 45d of the hydraulic unit 45 is, in the section perpendicular to the longitudinal direction X, located in a position lower than the upper edge 27c of the seat frame 27 and higher than the lower edge 27d of the seat frame 27. According to this arrangement, the lower end 45d of the hydraulic unit 45 can be conveniently protected by the seat frame 27.

The back surface 82b of the front seating portion 82, in the section perpendicular to the transverse direction Y, extends downward and forward from the rear end 82d of the front seating portion 82. Consequently, the space formed below the back surface 82b of the front seating portion 82 becomes lower (or becomes smaller) as it extends forward from the rear end 82d of the front seating portion 82. The space below the front seating portion 82 is therefore difficult to use as installation space for the hydraulic unit 45. The rear end 45b of the hydraulic unit 45 is, in the section perpendicular to the transverse direction Y, located more rearward than the rear end 82d of the front seating portion 82. That is, at least part of the hydraulic unit 45 is located more rearward than the front seating portion 82. The hydraulic unit 45 can therefore be located appropriately although the space below the front seating portion 82 is difficult to use as installation space for the hydraulic unit 45. The more difficult it is to use the space below the front seating portion 82 as installation space for the hydraulic unit 45, the higher utility is afforded by locating at least part of the hydraulic unit 45 more rearward than the front seating portion 82.

The front end 45a of the hydraulic unit 45 is, in the section perpendicular to the transverse direction Y, located more rearward than the rear end 82d of the front seating portion 82. Consequently, the entire hydraulic unit 45 is located more rearward than the front seating portion 82. The hydraulic unit 45 can therefore be located more appropriately even though the space below the front seating portion 82 is difficult to use as installa-tion space for the hydraulic unit 45.

The hydraulic unit 45 is located in the space Ea below the first portion 84. The first portion 84 is substantially horizontal in the section perpendicular to the transverse direction Y. Consequently, the space Ea below the first portion 84 has a shape easy to use as installation space for the hydraulic unit 45. The hydraulic unit 45 can therefore be located more appropriately.

The first portion 84 is, in the section perpendicular to the transverse direction Y, located in a position higher than the lowest point P3 of the back surface 81b of the seating portion 81. Thus, the space Ea is relatively high (large). The hydraulic unit 45 can therefore be located more appropriately.

The first portion 84 is, in the section perpendicular to the transverse direction Y, located in a position higher than the lowest point P1 of the upper surface 81a of the seating portion 81. Thus, the space Ea is relatively high (large). The hydraulic unit 45 can therefore be located more appropriately.

The first portion 84 is located more rearward than the front end 83c of the rear seating portion 83. That is, the hydraulic unit 45 is located more rearward than the front end 83c of the rear seating portion 83. The hydraulic unit 45 can therefore be located appropriately without impairing the seating comfort of the front seating portion 82.

The second portion 85 includes the low part 85a located in a position lower than the first portion 84 in the section perpendicular to the transverse direction Y. Consequently, the space below the low part 85a is lower (smaller) than the space Ea below the first portion 84. Compared with the space Ea, therefore, the space Eb below the second portion 85 is difficult to use as installation space for the hydraulic unit 45. The hydraulic unit 45 is not located in the space Eb. The hydraulic unit 45 can therefore be located appropriately. The more difficult it is to use the space Eb as installation space for the hydraulic unit 45, the higher utility is afforded by using the space Ea as installation space for the hydraulic unit 45.

The low part 85a includes the rear end of the second portion 85. This makes it difficult to use the space Eb below the second portion 85 as installation space for the hydraulic unit 45. Even in such a case, the hydraulic unit 45 can be located appropriately.

The low part 85a extends downward and forward from the rear end of the second portion 85. Consequently, the space Eb below the second portion 85 is difficult to use as installation space for the hydraulic unit 45. Even in such a case, the hydraulic unit 45 can be located appropriately.

The upper end 45c of the hydraulic unit 45 is, in the side view of the vehicle, located above the lower edge 88a of the right wall portion 88 and the lower edge 89a of the left wall portion 89. According to this arrangement, the hydraulic unit 45 is located in a relatively high position. The hydraulic unit 45 is therefore more conveniently prevented from interfering with the rear wheel 15. Further, the hydraulic unit 45 can be conveniently protected by the right wall portion 88 and left wall portion 89.

The lower end 45d of the hydraulic unit 45 is located above the lower edge 27d of the seat frame 27 in the side view of the vehicle. According to this arrangement, the hydraulic unit 45 is located in a relatively high position. The hydraulic unit 45 is therefore more conveniently prevented from interfering with the rear wheel 15.

The hydraulic unit 45 is located above the lower edge 27d of the seat frame 27 in the side view of the vehicle. According to this arrangement, the hydraulic unit 45 is located in a relatively high position. The hydraulic unit 45 can therefore be more conveniently prevented from interfering with the rear wheel 15.

The lower portion 46b of the hydraulic unit 45 overlaps the seat frame 27 in the side view of the vehicle. According to this arrangement, the hydraulic unit 45 can be conveniently protected by the seat frame 27.

The hydraulic unit 45 is located leftward of the right seat frame 27R in the plan view of the vehicle. The hydraulic unit 45 is located rightward of the left seat frame 27L in the plan view of the vehicle. The hydraulic unit 45 can therefore be conveniently protected by the right seat frame 27R and left seat frame 27L.

The rear end 45b of the hydraulic unit 45 is located more rearward than the rear end 18a of the air cleaner 18 in the plan view of the vehicle. According to this arrangement, the influence of the hydraulic unit 45 on the air cleaner 18 can conveniently be inhibited. For example, the hydraulic unit 45 can be installed without necessitating a shape change and a volume reduction of the air cleaner 18.

The front end 45a of the hydraulic unit 45 is located more rearward than the rear end 18a of the air cleaner 18 in the plan view of the vehicle. According to this arrangement, the influence of the hydraulic unit 45 on the air cleaner 18 can more conveniently be inhibited.

The hydraulic unit 45 is located in a position higher than the air cleaner 18 in the side view of the vehicle. According to this arrangement, the influence of the hydraulic unit 45 on the air cleaner 18 can more conveniently be inhibited.

With swinging of the swing arm 13 relative to the body frame 3, part of the rear wheel 15 is movable above the upper edge 28a of the back stay 28 in the side view of the vehicle. Thus, the rear wheel 15 is movable to a high position relative to the body frame 3. That is, the movable region of the rear wheel 15 is relatively large. Even in such a case, according to the straddled vehicle 1, the hydraulic unit 45 can be conveniently prevented from interfering with the rear wheel 15. The larger movable region of the rear wheel 15 provides the higher utility of the straddled vehicle 1. According to this straddled vehicle 1, the hydraulic unit 45 can be located without decreasing the movable region of the rear wheel 15.

With swinging of the swing arm 13 relative to the body frame 3, the upper end 15b of the rear wheel 15 is movable to substantially the same height position as the lower end 45d of the hydraulic unit 45.in the side view of the vehicle. Thus, the movable region of the rear wheel 15 is relatively large. Even in such a case, according to the straddled vehicle 1, the hydraulic unit 45 can be conveniently prevented from interfering with the rear wheel 15. Further, according to this straddled vehicle 1, the hydraulic unit 45 can be located without decreasing the movable region of the rear wheel 15.

Part of the hydraulic unit 45 overlaps the grab bars 16 in the side view of the vehicle. The hydraulic unit 45 can therefore be conveniently protected by the grab bars 16.

The rear fender 19 is located below the hydraulic unit 45 and above the rear wheel 15. The hydraulic unit 45 overlaps the rear fender 19 in the plan view of the vehicle. The rear fender 19 can therefore conveniently protect the hydraulic unit 45. For example, the rear fender 19 can block foreign matters scattered by the rear wheel 15, and can prevent the hydraulic unit 45 from being soiled or damaged by the foreign matters.

The hydraulic unit 45 is located above the bottom portion 91 of the rear fender 19. The hydraulic unit 45 can therefore be conveniently protected by the bottom portion 91.

The hydraulic unit 45 is located leftward of the right wall portion 92 and rightward of the left wall portion 93. That is, the space F is used as installation space for the hydraulic unit 45. The hydraulic unit 45 can therefore be located appropriately while inhibiting the influence of the hydraulic unit 45 on the other members. Further, the hydraulic unit 45 can be conveniently protected by the right wall portion 92 and left wall portion 93.

The upper end 45c of the hydraulic unit 45 is, in the section perpendicular to the longitudinal direction X, located in a position higher than the upper edge 92a of the right wall portion 92 and the upper edge 93a of the left wall portion 93. According to this arrangement, the hydraulic unit 45 is located in a relatively high position. The hydraulic unit 45 can therefore be more conveniently prevented from interfering with the rear wheel 15.

The lower end 45d of the hydraulic unit 45 is, in the section perpendicular to the longitudinal direction X, located in a position lower than the upper edge 92a of the right wall portion 92 and the upper edge 93a of the left wall portion 93. The lower end 45d of the hydraulic unit 45 can therefore be conveniently protected by the right wall portion 92 and left wall portion 93.

The upper edge 95a of the right outer wall portion 95 of the rear fender 19 is higher than the lower edge 88a of the right wall portion 88 of the seat 10. The right outer wall portion 95 and right wall portion 88 can therefore conveniently protect the entire right part of the hydraulic unit 45. The upper edge 97a of the left outer wall portion 97 of the rear fender 19 is higher than the lower edge 89a of the left wall portion 89 of the seat 10. The left outer wall portion 97 and left wall portion 89 can therefore conveniently protect the entire left part of the hydraulic unit 45.

The hydraulic unit 45 is located above the rear fender 19 in the section perpendicular to the longitudinal direction X. This can conveniently prevent foreign matters entering the space F.

The rear fender 19 is, in the section perpendicular to the longitudinal direction X, located more leftward than the lower edge 88a of the right wall portion 88 of the seat 10 and more rightward than the lower edge 89a of the left wall portion 89 of the seat 10. This can conveniently prevent foreign matters entering the spaces E and F from a gap between the right outer wall portion 95 and right wall portion 88, and from a gap between the left outer wall portion 97 and left wall portion 89.

This invention is not limited to the foregoing embodiment, but may be modified as follows:
(1) In the foregoing embodiment, the hydraulic unit 45 is connected to the brake caliper 44 and brake caliper 66. The invention is not limited to this. For example, the hydraulic unit 45 may be connected to one of the brake caliper 44 and brake caliper 66. That is, the hydraulic unit 45 need not be connected to the other of the brake caliper 44 and brake caliper 66. In other words, the hydraulic unit 45 may regulate only the hydraulic pressure of the brake fluid for braking one of the front wheel 6 and rear wheel 15.

Further, in this modified embodiment, the construction of the other of the brake caliper 44 and brake caliper 66 may be changed. For example, the other of the brake caliper 44 and brake caliper 66 may be changed to a mechanical brake mechanism.

When, for example, the hydraulic unit 45 is not connected to the brake caliper 66, the brake system 40 may have a brake drum, a brake shoe, and a brake wire. The brake drum is fixedly connected to the rear wheel 15. The brake drum rotates with the rear wheel 15 about the rear axle 14 (rotation center N). The brake shoe is provided capable of contacting the brake drum. The brake shoe is supported by the swing arm 13. The brake shoe is the mechanical type. The brake wire has one end thereof connected to the input device 61, and the other end connected to the brake shoe. The brake wire transmits a control amount of the input device 61 to the brake shoe. According to the control amount of the input device 61, the brake shoe contacts the brake drum to brake rotation of the rear wheel 15 about the rear axle 14 (rotation center N). More particularly, the brake shoe applies resistance (specifically, frictional force) to the brake drum (i.e. the rear wheel 15) for braking rotation of the rear wheel 15. That is, the brake shoe brakes the rear wheel 15. In the case of this modified embodiment, the brake shoe is an example of the rear brake mechanism in this invention.

Similarly, when the hydraulic unit 45 is not connected to the brake caliper 44, the brake caliper 44 may be changed to a mechanical brake mechanism (e.g. a brake shoe). In the case of this modified embodiment, the mechanical brake mechanism (e.g. the brake shoe) is an example of the front brake mechanism in this invention.

(2) In the foregoing embodiment, Fig. 1 schematically shows the boundary K in a vertical straight line, and Fig. 8 schematically shows the boundary K in a curve. The invention is not limited to this. For example, the boundary K may be curved in the side view of the vehicle. For example, in the plan view of the vehicle, the boundary K may extend linearly. For example, the boundary K may, or may not, have a length (width) in the longitudinal direction X. For example, the boundary K may be identifiable by at least one of shape, material, color, and pattern. For example, when the front seat 10a (front seating portion 82) and the rear seat 10b (rear seating portion 83) are separated from each other, the boundary K may be a member or a space which separates the front seat 10a (front seating portion 82) and the rear seat 10b (rear seating portion 83). When, for example, the seat 10 has a backrest located between the front seating portion 82 and rear seating portion 83, the boundary K may be the backrest.

(3) In the foregoing embodiment, the rear end of the front seat 10a and the front end of the rear seat 10b adjoin each other. The invention is not limited to this. The rear end of the front seat 10a and the front end of the rear seat 10b may be separated. In the foregoing embodiment, the rear end 82d of the front seating portion 82 and the front end 83c of the rear seating portion 83 adjoin each other. The invention is not limited to this. The rear end 82d of the front seating portion 82 and the front end 83c of the rear seating portion 83 may be separated.

(4) In the foregoing embodiment, the front seat 10a and rear seat 10b are formed integral. The invention is not limited to this. The front seat 10a and rear seat 10b may be separate elements. The rear end 82d of the front seating portion 82 may not be in the same position as the front end 83c of the rear seating portion 83.

(5) In the foregoing embodiment, the seat 10 includes the rear seat 10b. The invention is not limited to this. The seat 10 may not include the rear seat 10b. In the foregoing embodiment, the seating portion 81 includes the rear seating portion 83. The invention is not limited to this. The seating portion 81 may not include the rear seating portion 83.

(6) In the foregoing embodiment, the hydraulic unit 45 is located more rearward than the boundary K. The invention is not limited to this. For example, the front end 45a of the hydraulic unit 45 may be located more forward than the boundary K. In the foregoing embodiment, the hydraulic unit 45 does not cross the boundary K in the plan view of the vehicle. The invention is not limited to this. The hydraulic unit 45 may cross the boundary K in the plan view of the vehicle.

(7) In the foregoing embodiment, the positional relationship between the hydraulic unit 45 and seat 10 (seating portion 81) may be changed as appropriate. For example, at least part of the hydraulic unit 45 may not overlap the seat 10 in the side view of the vehicle. For example, at least part of the hydraulic unit 45 may not overlap the seat 10 (seating portion 81) in the plan view of the vehicle.

(8) In the foregoing embodiment, the positional relationship between the hydraulic unit 45 and front seat 10a (front seating portion 82) may be changed as appropriate. For example, the front end 45a of the hydraulic unit 45 may be located equal with or more forward than the rear end of the front seat 10a. For example, the front end 45a of the hydraulic unit 45 may be located equal with or more forward than the rear end 82d of the front seating portion 82. For example, at least part of the hydraulic unit 45 may overlap the front seat 10a (front seating portion 82) in the plan view of the vehicle.

(9) In the foregoing embodiment, the positional relationship between the hydraulic unit 45 and rear seat 10b (rear seating portion 83) may be changed as appropriate. For example, the front end 45a of the hydraulic unit 45 may be located equal with or more forward than the front end of the rear seat 10b. For example, the front end 45a of the hydraulic unit 45 may be located equal with or more forward than the front end 83c of the rear seating portion 83. For example, at least part of the hydraulic unit 45 may not overlap the rear seat 10b (rear seating portion 83) in the plan view of the vehicle.

(10) In the foregoing embodiment, the positional relationship among the hydraulic unit 45, seating portion 81, right wall portion 88, and left wall portion 89 may be changed as appropriate. For example, the upper end 45a of the hydraulic unit 45 may be, in the side view of the vehicle, located above one of the lower edge 88a of the right wall portion 88 and the lower edge 89a of the left wall portion 89. The lower end 45d of the hydraulic unit 45 may be, in the side view of the vehicle, located above at least one of the lower edge 88a of the right wall portion 88 and the lower edge 89a of the left wall portion 89. For example, the entire hydraulic unit 45 may be located in the space E.

(11) In the foregoing embodiment, the upper end 45c of the hydraulic unit 45 is, in the section perpendicular to the transverse direction Y, located in a position higher than the lowest point P1 of the upper surface 81a of the seating portion 81. The invention is not limited to this. For example, the upper end 45c of the hydraulic unit 45 may be, in the section perpendicular to the transverse direction Y, located in a position level with or lower than the lowest point P1 of the upper surface 81a of the seating portion 81.

(12) In the foregoing embodiment, the positional relationship between the hydraulic unit 45 and the lowest points P1-P3 may be changed as appropriate. For example, the upper end 45c of the hydraulic unit 45 may be, in the section perpendicular to the transverse direction Y, located in a position level with or lower than the lowest point P3 of the back surface 81b of the seating portion 81. For example, the lower end 45d of the hydraulic unit 45 may be, in the section perpendicular to the transverse direction Y, located in a position level with or lower than the lowest point P1 of the upper surface 81a of the seating portion 81. For example, the lower end 45d of the hydraulic unit 45 may be, in the section perpendicular to the transverse direction Y, located in a position level with or lower than the lowest point P3 of the back surface 81b of the seating portion 81.

(13) In the foregoing embodiment, the low part 85a is a part of the second portion 85. The invention is not limited to this. For example, the low part 85a may be the entire second portion 85. In the foregoing embodiment, the low part 85a includes the rear end of the second portion 85. The invention is not limited to this. For example, the low part 85a may not include the rear end of the second portion 85.

(14) In the foregoing embodiment, part (i.e. the upper portion 46a) of the hydraulic unit 45 is located above the upper edge 27c of the seat frame 27 in the side view of the vehicle. The invention is not limited to this. For example, the entire hydraulic units 45 may be located above the upper edge 27c of the seat frame 27 in the side view of the vehicle. For example, the hydraulic unit 45 may not cross the upper edge 27c of the seat frame 27 in the side view of the vehicle. For example, the hydraulic unit 45 may not overlap the seat frame 27 in the side view of the vehicle. For example, part of the hydraulic unit 45 may be located below the lower edge 27d of the seat frame 27 in the side view of the vehicle. For example, the hydraulic unit 45 may cross the lower edge 27d of the seat frame 27 in the side view of the vehicle.

(15) In the foregoing embodiment, the upper portion 46a is located above the upper edge 27Rc of the right seat frame 27R and the upper edge 27Lc of the left seat frame 27L in the side view of the vehicle. The invention is not limited to this. For example, the upper portion 46a may be located above one of the upper edge 27Rc of the right seat frame 27R and the upper edge 27Lc of the left seat frame 27L in the side view of the vehicle.

(16) In the foregoing embodiment, the lower portion 46b is located above the lower edge 27Rd of the right seat frame 27R and the lower edge 27Ld of the left seat frame 27L in the side view of the vehicle. The invention is not limited to this. For example, the lower portion 46b may be located below at least one of the lower edge 27Rd of the right seat frame 27R and the lower edge 27Ld of the left seat frame 27L in the side view of the vehicle.

(17) In the foregoing embodiment, the positional relationship between the hydraulic unit 45 and rear fender 19 may be changed as appropriate. At least one of the upper edge 92a of the right wall portion 92 and the upper edge 93a of the left wall portion 93 may be, in the section perpendicular to the longitudinal direction X, located in a position level with or higher than the upper end 45c of the hydraulic unit 45. At least one of the upper edge 95a of the right outer wall portion 95 and the upper edge 97a of the left outer wall portion 97 may be, in the section perpendicular to the longitudinal direction X, located in a position level with or higher than the upper end 45c of the hydraulic unit 45. For example, the entire hydraulic unit 45 may be located in the space F.

(18) In the foregoing embodiment, the hydraulic unit 45 is located more rearward than the front ends 16a of the grab bars 16 in the side view of the vehicle. The invention is not limited to this. The front end 45a of the hydraulic unit 45 may be located equal with or more forward than the front ends 16a of the grab bars 16 in the side view of the vehicle.

(19) In the foregoing embodiment, the positional relationship between the hydraulic unit 45 and rear wheel 15 may be changed as appropriate. The front end 45a of the hydraulic unit 45 may be located equal with or more forward than the front end 15a of the rear wheel 15. For example, at least part of the hydraulic unit 45 may not overlap the rear wheel 15 in the plan view of the vehicle.

(20) In the foregoing embodiment, the positional relationship between the hydraulic unit 45 and air cleaner 18 may be changed as appropriate. For example, at least part of the hydraulic unit 45 may overlap the air cleaner 18 in the plan view of the vehicle. In the foregoing embodiment, the front end 45a of the hydraulic unit 45 is located more rearward than the rear end 18a of the air cleaner 18 in the plan view of the vehicle. The invention is not limited to this. The front end 45a of the hydraulic unit 45 may be located equal with or more forward than the rear end 18a of the air cleaner 18 in the plan view of the vehicle. The rear end 45b of the hydraulic unit 45 may be located equal with or more forward than the rear end 18a of the air cleaner 18 in the plan view of the vehicle. At least part of the hydraulic unit 45 may be located in a position level with or lower than the air cleaner 18.

(21) In the foregoing embodiment, the hydraulic unit 45, rear wheel 15, and air cleaner 18 are arranged on the vehicle center line C in the plan view of the vehicle. The invention is not limited to this. At least one of the hydraulic unit 45, rear wheel 15, and air cleaner 18 may not be located on the vehicle center line C in the plan view of the vehicle. That is, at least one of the hydraulic unit 45, rear wheel 15, and air cleaner 18 may not cross the vehicle center line C in the plan view of the vehicle.

(22) In the foregoing embodiment, the positional relationship between the seat 10 and seat frame 27 may be changed as appropriate. For example, the lower edge 88a of the right wall portion 88 and the lower edge 89a of the left wall portion 89 may be, in the section perpendicular to the longitudinal direction X, located in positions lower than the upper edge 27c of the seat frame 27, respectively. For example, the lower edge 88a of the right wall portion 88 and the lower edge 89a of the left wall portion 89 may be, in the section perpendicular to the longitudinal direction X, located in positions lower than the lower edge 27d of the seat frame 27, respectively.

(23) In the foregoing embodiment, the positional relationship among the joints 55 and 56, clamp 57, master cylinder 42, joints 75-77, clamps 78 and 79, guide 80, brake caliper 44, and brake disc 43 may be changed as appropriate. For example, the clamp 57 may be located in the right area AR, and the master cylinder 42 in the left area AL. For example, both the clamp 57 and master cylinder 42 may be located in one of the right area AR and left area AL. For example, the joint 77 may be located in the left area AL, and the clamp 78 in the right area AR. For example, both the joint 77 and clamp 78 may be located in one of the right area AR and left area AL. For example, at least one of the joint 77, clamps 78 and 79, guide 80, brake disc 43, and brake caliper 44 may be located in the right area AR, and the rest in the left area AL. For example, the master cylinder 42 may be located in the left area AL, and the brake caliper 44 in the right area AR. For example, both the master cylinder 42 and brake caliper 44 may be located in one of the right area AR and left area AL. For example, the clamp 57 may be located in the left area AL, and the master cylinder 42, joint 77, clamps 78 and 79, guide 80, brake caliper 44, and brake disc 43 all in the right area AR. For example, at least one of the clamp 57, master cylinder 42, joint 77, clamps 78 and 79, guide 80, brake caliper 44, and brake disc 43 may be located in the right area AR, and the rest in the left area AL.

(24) In the foregoing embodiment, the joints 55 and 56 and clamp 57 are provided. The invention is not limited to this. For example, at least one of the joints 55 and 56 and clamp 57 may be omitted. For example, a further member may be provided for holding the primary piping 47. In the foregoing embodiment, the joints 75-77, clamps 78 and 79, and guide 80 are provided. The invention is not limited to this. For example, at least one of the joints 75-77, clamps 78 and 79, and guide 80 may be omitted. For example, a further member may be provided for holding the secondary piping 49.

(25) In the foregoing embodiment, the arrangement of the primary piping 47 and secondary piping 49 has been described, which may be changed as appropriate. For example, the first flexible portion may be located only in one of the right area AR and left area AL. For example, the second flexible portion of the secondary piping 49 may be located only in one of the right area AR and left area AL. For example, the most down-stream portion of the secondary piping 49 may be located in at least one of the right area AR and left area AL. For example, the third flexible portion of the secondary piping 49 may be located in at least one of the right area AR and left area AL. For example, the most downstream portion may be located equal with or more forward than the left front fork 33L in the side view of the vehicle.

(26) In the foregoing embodiment, the number of pipes (51-53) included in the primary piping 47 is three. The invention is not limited to this. For example, the number of pipes included in the primary piping 47 may be one, two, four or more. In the foregoing embodiment, the number of pipes (71-74) included in the secondary piping 49 is four. The invention is not limited to this. For example, the number of pipes included in the secondary piping 49 may be one, two, three, five or more.

(27) In the foregoing embodiment, the pipes 51-53 and 71-74 have been described. The invention is not limited to this. For example, the pipes 51 and 71 may have no flexibility, respectively. For example, the pipes 51 and 71 may be metal pipes, respectively. For example, the pipes 52, 72, and 73 may have flexibility, respectively. For example, the pipes 52, 72, and 73 may be rubber pipes, respectively.

(28) In the foregoing embodiment, the number of brake disc 43 is one and the number of brake caliper 44 is one. The invention is not limited to this. For example, the number of brake disc 43 may be two. For example, the number of brake caliper 44 may be two. When, for example, the steering device 4 is in neutral position, one of the brake discs 43 and one of the brake calipers 44 may be located in the right area AR, and the other brake disc 43 and the other brake caliper 44 in the left area AL.

In the foregoing embodiment, the number of brake disc 65 is one and the number of brake caliper 66 is one. The invention is not limited to this. For example, the number of brake disc 65 may be two. For example, the number of brake caliper 66 may be two.

(29) In the foregoing embodiment, the hydraulic unit 45 is supported by the seat frame 27. The clamp 57 is supported by the left main frame 22L. The joint 77 is supported by the right main frame 22R. However, the invention is not limited to this. For example, the hydraulic unit 45 may be supported by at least any one of the elements 20-24 and 26-28 included in the body frame 3. Similarly, each of the clamp 57 and joint 77 may be supported by at least any one of the elements 20-24 and 26-28 included in the body frame 3. Here, it is preferable that the hydraulic unit 45 is supported by at least any one of the elements included in the rear frame 26.

(30) In the foregoing embodiment, the master cylinder 42 is supported by the handlebar 37. The clamp 78 is supported by the under bracket 32. The clamp 79, guide 80, and brake caliper 44 are supported by the lower left tube 35L. However, the invention is not limited to this. For example, the master cylinder 42, clamps 78 and 79, guide 80, and brake caliper 44 may be supported by at least any one of the elements included in the steering device 4, respectively. Here, it is preferable that the master cylinder 42 and clamp 78 are supported by at least any one of the elements included in the upper device 4a, respectively. It is preferable that the clamp 79, guide 80, and brake caliper 44 are supported by at least any one of the elements included in the lower device 4b.

(31) In the foregoing embodiment, the straddled vehicle 1 has been illustrated as an example of dual purpose vehicles. The invention is not limited to this. The straddled vehicle 1 may be changed to vehicles of other types, such as the off-road type, street type, sport type or a vehicle for irregular grounds (ALL-TERRAIN VEHICLE). For example, the straddled vehicle 1 may be changed to a vehicle other than the scooter type.

(32) In the foregoing embodiment, the number of front wheel 6 is one. The invention is not limited to this. The number of front wheel 6 may be changed to two. In the foregoing embodiment, the number of rear wheel 15 is one. The invention is not limited to this. The number of rear wheel 15 may be changed to two.

(33) In the foregoing embodiment, the engine (internal combustion engine) 8 has been illustrated as power source. The invention is not limited to this. For example, the straddled vehicle 1 may have an electric motor as power source.

## Claims

1. A straddled vehicle (1) comprising:
a body frame (3);
a steering device (4) supported by the body frame (3);
a front wheel (6) supported by the steering device (4);
a front brake mechanism (44) for braking the front wheel (6);
a swing arm (13) supported by the body frame (3) to be swingable about a swing center (M) relative to the body frame (3);
a rear wheel (15) supported by the swing arm (13) to be rotatable about a rotation center (N) relative to the swing arm (13);
a rear brake mechanism (66) for braking the rear wheel (15);
a hydraulic unit (45) connected to at least one of the front brake mechanism (44) and the rear brake mechanism (66); and
a seat (10) supported by the body frame (3);
wherein
the hydraulic unit (45) is located more rearward than the swing center (M) in a side view of the vehicle;
the hydraulic unit (45) is located more forward than the rotation center (N) in the side view of the vehicle;
the body frame (3) includes a seat frame (27) for supporting the seat (10); and
at least part of the hydraulic unit (45) is located above an upper edge (27c) of the seat frame (27) in the side view of the vehicle,
**characterized in that**
the hydraulic unit (45) is entirely located more rearward than a front end (15a) of the rear wheel (15) in a plan view of the vehicle.

2. The straddled vehicle (1) according to claim 1, comprising tandem steps (17) for receiving a fellow passenger's feet;
wherein the hydraulic unit (45) is located more rearward than the tandem steps (17) in the side view of the vehicle.

3. The straddled vehicle (1) according to claim 1or 2, comprising grab bars (16) for grabbing by a fellow passenger;
wherein the hydraulic unit (45) is located more rearward than front ends (16a) of the grab bars (16) in the side view of the vehicle.

4. The straddled vehicle (1) according to any one of claims 1 to 3, wherein the hydraulic unit (45) overlaps the seat (10) in the plan view of the vehicle.

5. The straddled vehicle (1) according to any one of claims 1 to 4, wherein:
the seat (10) includes a seating portion (81); and
the hydraulic unit (45) is located below a back surface (81b) of the seating portion (81).

6. The straddled vehicle (1) according to claim 5, wherein:
the seating portion (81) includes:
a front seating portion (82) for contacting a rider's buttocks; and
a rear seating portion (83) located more rearward than the front seating portion (82) in the side view of the vehicle for contacting a fellow passenger's buttocks; and
the hydraulic unit (45) has a rear end (45b) thereof located more rearward, in the plan view of the vehicle, than a boundary (K) between the front seating portion (82) and the rear seating portion (83).

7. The straddled vehicle (1) according to claim 6, wherein the hydraulic unit (45) has a front end (45a) thereof located more rearward, in the plan view of the vehicle, than the boundary (K) between the front seating portion (82) and the rear seating portion (83).

8. The straddled vehicle (1) according to any one of claims 5 to 7, wherein the hydraulic unit (45) has an upper end (45c) thereof located in a position higher than a lowest point (P3) of the back surface (81b) of the seating portion (81) in a section perpendicular to a transverse direction (Y) of the straddled vehicle (1).

9. The straddled vehicle (1) according to any one of claims 5 to 8, wherein:
the seat (10) includes:
a right wall portion (88) extending downward from a right edge (86) of the seating portion (81); and
a left wall portion (89) extending downward from a left edge (87) of the seating portion (81);
the hydraulic unit (45) is located more leftward than the right wall portion (88);
the hydraulic unit (45) is located more rightward than the left wall portion (89); and
the upper end (45c) of the hydraulic unit (45) is, in the side view of the vehicle, located above at least one of a lower edge (88a) of the right wall portion (88) and a lower edge (89a) of the left wall portion (89).

10. The straddled vehicle (1) according to any one of claims 1 to 9, wherein the hydraulic unit (45) is located above a lower edge (27d) of the seat frame (27) in the side view of the vehicle.

11. The straddled vehicle (1) according to any one of claims 1 to 10, wherein part of the hydraulic unit (45) overlaps the seat frame (27) in the side view of the vehicle.

12. The straddled vehicle (1) according to any one of claims 1 to 11, wherein:
the seat frame (27) includes:
a right seat frame (27R); and
a left seat frame (27L) located more leftward than the right seat frame (27R);
the hydraulic unit (45) is located leftward of the right seat frame (27R) in the plan view of the vehicle; and
the hydraulic unit (45) is located rightward of the left seat frame (27L) in the plan view of the vehicle.

13. The straddled vehicle (1) according to any one of claims 1 to 12, comprising an air cleaner (18);
wherein the rear end (45b) of the hydraulic unit (45) is located more rearward than a rear end (18a) of the air cleaner (18) in the plan view of the vehicle.

14. The straddled vehicle (1) according to any one of claims 1 to 13, wherein:
the body frame (3) includes a back stay (28) located below the seat frame (27) in the side view of the vehicle; and
with swinging of the swing arm (13) relative to the body frame (3), part of the rear wheel (15) is movable above an upper edge (28a) of the back stay (28) in the side view of the vehicle.

## Patentansprüche

1. Spreizsitz-Fahrzeug (1), das umfasst:
einen Karosserierahmen (3);
eine Lenkeinrichtung (4), die an dem Karosserierahmen (3) gelagert ist;
ein Vorderrad (6), das an der Lenkvorrichtung (4) gelagert ist;
einen vorderen Bremsmechanismus (44) zum Bremsen des Vorderrades (6);
eine Hinterradschwinge (13), die an dem Karosserierahmen (3) so gelagert ist, dass sie relativ zum Karosserierahmen (3) um einen Schwenk-Mittelpunkt (M) herum geschwenkt werden kann;
ein Hinterrad (15), das an der Hinterradschwinge (13) so gelagert ist, dass es relativ zu der Hinterradschwinge (13) um einen Dreh-Mittelpunkt (N) herum gedreht werden kann;
einen hinteren Bremsmechanismus (66) zum Bremsen des Hinterrades (15);
eine Hydraulik-Einheit (45), die mit dem vorderen Bremsmechanismus (44) oder/und dem hinteren Bremsmechanismus (66) verbunden ist; sowie
einen Sitz (10), der von dem Karosserierahmen (3) getragen wird;
wobei
die Hydraulik-Einheit (45), in einer Seitenansicht des Fahrzeugs, weiter hinten angeordnet ist als der Schwenk-Mittelpunkt (M);
die Hydraulik-Einheit (45), in der Seitenansicht des Fahrzeugs, weiter vorn angeordnet ist als der Dreh-Mittelpunkt (M);
der Karosserierahmen (3) einen Sitzrahmen (27) zum Tragen des Sitzes (10) enthält; und
wenigstens ein Teil der Hydraulik-Einheit (45), in der Seitenansicht des Fahrzeugs, oberhalb einer Oberkante (27c) des Sitzrahmens (27) angeordnet ist,
**dadurch gekennzeichnet, dass**
die Hydraulik-Einheit (45), in einer Draufsicht auf das Fahrzeug, vollständig weiter hinten angeordnet ist als ein vorderes Ende (15a) des Hinterrades (15).

2. Spreizsitz-Fahrzeug (1) nach Anspruch 1, das Sozius-Fußrasten (17) zum Aufnehmen der Füße eines Mitfahrers umfasst;
wobei die Hydraulik-Einheit (45), in der Seitenansicht des Fahrzeugs, weiter hinten angeordnet ist als die Sozius-Fußrasten (17).

3. Spreizsitz-Fahrzeug (1) nach Anspruch 1 oder 2, das Griff-Bügel (16) zum Greifen durch einen Mitfahrer umfasst;
wobei die Hydraulik-Einheit (45), in der Seitenansicht des Fahrzeugs, weiter hinten angeordnet ist als vordere Enden (16a) der Griff-Bügel (16).

4. Spreizsitz-Fahrzeug (1) nach einem der Ansprüche 1 bis 3, wobei die Hydraulik-Einheit (45), in der Draufsicht auf das Fahrzeug, den Sitz (10) überlappt.

5. Spreizsitz-Fahrzeug (1) nach einem der Ansprüche 1 bis 4, wobei:
der Sitz (10) einen Sitzabschnitt (81) enthält; und
die Hydraulik-Einheit (45) unterhalb einer hinteren Fläche (81b) des Sitzabschnitts (81) angeordnet ist.

6. Spreizsitz-Fahrzeug (1) nach Anspruch 5, wobei:
der Sitzabschnitt (81) enthält:
einen vorderen Sitzabschnitt (82), der mit dem Gesäß eines Fahrers in Kontakt kommt; sowie
einen hinteren Sitzabschnitt (83), der, in der Seitenansicht des Fahrzeugs, weiter hinten angeordnet ist als der vordere Sitzabschnitt (82) und mit dem Gesäß eines Mitfahrers in Kontakt kommt; und
wobei ein hinteres Ende (45b) der Hydraulik-Einheit (45), in der Draufsicht auf das Fahrzeug, weiter hinten angeordnet ist als eine Grenze (K) zwischen dem vorderen Sitzabschnitt (82) und dem hinteren Sitzabschnitt (83).

7. Spreizsitz-Fahrzeug (1) nach Anspruch 6, wobei ein vorderes Ende (45a) der Hydraulik-Einheit (45), in der Draufsicht auf das Fahrzeug, weiter hinten angeordnet ist als die Grenze (K) zwischen dem vorderen Sitzabschnitt (82) und dem hinteren Sitzabschnitt (83).

8. Spreizsitz-Fahrzeug (1) nach einem der Ansprüche 5 bis 7, wobei ein oberes Ende (45c) der Hydraulik-Einheit (45), in einem Schnitt senkrecht zu einer Querrichtung (Y) des Spreizsitz-Fahrzeugs (1), an einer Position angeordnet ist, die höher liegt als ein tiefster Punkt (P3) der hinteren Fläche (81b) des Sitzabschnitts (81).

9. Spreizsitz-Fahrzeug (1) nach einem der Ansprüche 5 bis 8, wobei:
der Sitz (10) enthält:
einen rechten Wandabschnitt (88), der sich von einer rechten Kante (86) des Sitzabschnitts (81) nach unten erstreckt; und
einen linken Wandabschnitt (89), der sich von einer linken Kante (87) des Sitzabschnitts (81) nach unten erstreckt;
(88); wobei die Hydraulik-Einheit (45) weiter links angeordnet ist als der rechte Wandabschnitt
die Hydraulik-Einheit (45) weiter rechts angeordnet ist als der linke Wandabschnitt (89); und
das obere Ende (45c) der Hydraulik-Einheit (45), in der Seitenansicht des Fahrzeugs, oberhalb einer Unterkante (88a) des rechten Wandabschnitts (88) oder/und einer Unterkante (89a) des linken Wandabschnitts (89) angeordnet ist.

10. Spreizsitz-Fahrzeug (1) nach einem der Ansprüche 1 bis 9, wobei die Hydraulik-Einheit (45), in der Seitenansicht des Fahrzeugs, oberhalb einer Unterkante (27d) des Sitzrahmens (27) angeordnet ist.

11. Spreizsitz-Fahrzeug (1) nach einem der Ansprüche 1 bis 10, wobei ein Teil der Hydraulik-Einheit (45), in der Seitenansicht des Fahrzeugs, den Sitzrahmen (27) überlappt.

12. Spreizsitz-Fahrzeug (1) nach einem der Ansprüche 1 bis 11, wobei:
der Sitzrahmen (27) enthält:
einen rechten Sitzrahmen (27R); sowie
einen linken Sitzrahmen (27L), der weiter links angeordnet ist als der rechte Sitzrahmen (27R);
wobei die Hydraulik-Einheit (45), in der Draufsicht auf das Fahrzeug, links von dem rechten Sitzrahmen (27R) angeordnet ist; und
die Hydraulik-Einheit (45), in der Draufsicht auf das Fahrzeug, rechts von dem linken Sitzrahmen (27L) angeordnet ist.

13. Spreizsitz-Fahrzeug (1) nach einem der Ansprüche 1 bis 12, das einen Luftfilter (18) umfasst;
wobei das hintere Ende (45b) der Hydraulik-Einheit (45), in der Draufsicht auf das Fahrzeug, weiter hinten angeordnet ist als ein hinteres Ende (18a) des Luftfilters (18).

14. Spreizsitz-Fahrzeug (1) nach einem der Ansprüche 1 bis 13, wobei:
der Karosserierahmen (3) eine Hinterradstrebe (28) enthält, die, in der Seitenansicht des Fahrzeugs, unterhalb des Sitzrahmens (27) angeordnet ist; und
bei Schwenken der Hinterradschwinge (13) relativ zu dem Karosserierahmen (3) ein Teil des Hinterrades (15), in der Seitenansicht des Fahrzeugs, über eine Oberkante (28a) der Hinterradstrebe (28) bewegt werden kann.

## Revendications

1. Véhicule à selle (1) comprenant :
un cadre (3) ;
un dispositif de direction (4) soutenu par le cadre (3) ;
une roue avant (6) soutenu par le dispositif de direction (4) ;
un mécanisme de frein avant (44) pour freiner la roue avant (6) ;
un bras oscillant (13) soutenu par le cadre (3) pour osciller autour d'un centre d'oscillation (M) par rapport au cadre (3) ;
une roue arrière (15) soutenu par le bras oscillant (13) pour tourner autour d'un centre de rotation (N) par rapport au bras oscillant (13) ;
un mécanisme de frein arrière (66) pour freiner la roue arrière (15) ;
une unité hydraulique (45) connectée à au moins un du mécanisme de frein avant (44) et du mécanisme de frein arrière (66) ; et
un siège (10) soutenu par le cadre (3) ;
dans lequel
l'unité hydraulique (45) est située plus en arrière que le centre d'oscillation (M) dans une vue latérale du véhicule ;
l'unité hydraulique (45) est située plus en avant que le centre de rotation (N) dans la vue latérale du véhicule ;
le cadre (3) inclut une structure pour siège (27) pour soutenir le siège (10) ; et
au moins une partie de l'unité hydraulique (45) est située au-dessus d'une arête supérieure (27c) de la structure pour siège (27) dans la vue latérale du véhicule,
**caractérisé en ce que**
l'unité hydraulique (45) est entièrement située plus en arrière qu'une extrémité avant (15a) de la roue arrière (15) dans une vue en plan du véhicule.

2. Le véhicule à selle (1) selon la revendication 1, comprenant des repose-pieds passager (17) pour recevoir les pieds d'un passager ;
dans lequel l'unité hydraulique (45) est située plus en arrière que les repose-pieds passager (17) dans la vue latérale du véhicule.

3. Le véhicule à selle (1) selon la revendication 1 ou 2, comprenant des poignées de saisie (16) qu'un passager saisit ;
dans lequel l'unité hydraulique (45) est située plus en arrière que des extrémités avant (16a) des poignées de saisie (16) dans la vue latérale du véhicule.

4. Le véhicule à selle (1) selon l'une quelconque des revendications 1 à 3, dans lequel l'unité hydraulique (45) chevauche le siège (10) dans la vue en plan du véhicule.

5. Le véhicule à selle (1) selon l'une quelconque des revendications 1 à 4, dans lequel :
le siège (10) inclut une partie d'assise (81) ; et
l'unité hydraulique (45) est située sous une surface arrière (81b) de la partie d'assise (81).

6. Le véhicule à selle (1) selon la revendication 5, dans lequel :
la partie d'assise (81) inclut :
une partie d'assise avant (82) pour entrer en contact avec le postérieur d'un motocycliste ; et
une partie d'assise arrière (83) située plus en arrière que la partie d'assise avant (82) dans la vue latérale du véhicule pour entrer en contact avec le postérieur d'un passager ; et
l'unité hydraulique (45) présente une extrémité arrière (45b) de celle-ci située plus en arrière, dans la vue en plan du véhicule, qu'une limite (K) entre la partie d'assise avant (82) et la partie d'assise arrière (83).

7. Le véhicule à selle (1) selon la revendication 6, dans lequel l'unité hydraulique (45) présente une extrémité avant (45b) de celle-ci située plus en arrière, dans la vue en plan du véhicule, qu'une limite (K) entre la partie d'assise avant (82) et la partie d'assise arrière (83).

8. Le véhicule à selle (1) selon l'une quelconque des revendications 5 à 7, dans lequel l'unité hydraulique (45) présente une extrémité supérieure (45c) de celle-ci située à un emplacement supérieur à un point le plus bas (P3) de la surface arrière (81b) de la partie d'assise (81) dans une section perpendiculaire à une direction transversale (Y) du véhicule à selle (1).

9. Le véhicule à selle (1) selon l'une quelconque des revendications 5 à 8, dans lequel :
le siège (10) inclut :
une partie de paroi droite (88) s'étendant vers le bas depuis une arête droite (86) de la partie d'assise (81) ; et
une partie de paroi gauche (89) s'étendant vers le bas depuis une arête gauche (87) de la partie d'assise (81) ;
l'unité hydraulique (45) est située plus vers la gauche que la partie de paroi droite (88) ;
l'unité hydraulique (45) est située plus vers la droite que la partie de paroi gauche (89) ; et
l'extrémité supérieure (45c) de l'unité hydraulique (45) est, dans la vue latérale du véhicule, située au-dessus d'au moins une d'une arête inférieure (88a) de la partie de paroi droite (88) et d'une arête supérieure (89a) de la partie de paroi gauche (89).

10. Le véhicule à selle (1) selon l'une quelconque des revendications 1 à 9, dans lequel l'unité hydraulique (45) est située au-dessus d'une arête inférieure (27d) de la structure de siège (27) dans la vue latérale du véhicule.

11. Le véhicule à selle (1) selon l'une quelconque des revendications 1 à 10, dans lequel une partie de l'unité hydraulique (45) chevauche la structure de siège (27) dans la vue latérale du véhicule.

12. Le véhicule à selle (1) selon l'une quelconque des revendications 1 à 11, dans lequel :
la structure de siège (27) inclut :
une structure de siège droite (27R) ; et
une structure de siège gauche (27L) située plus vers la gauche que la structure de siège droite (27R);
l'unité hydraulique (45) est située vers la gauche de la structure de siège droite (27R) dans la vue en plan du véhicule ; et
l'unité hydraulique (45) est située vers la droite de la structure de siège gauche (27L) dans la vue en plan du véhicule.

13. Le véhicule à selle (1) selon l'une quelconque des revendications 1 à 12, comprenant un filtre à air (18) ;
dans lequel l'extrémité arrière (45b) de l'unité hydraulique (45) est située plus en arrière qu'une extrémité arrière (18a) du filtre à air (18) dans la vue latérale du véhicule.

14. Le véhicule à selle (1) selon l'une quelconque des revendications 1 à 13, dans lequel :
le cadre (3) inclut un support arrière (28) situé sous la structure de siège (27) dans la vue latérale du véhicule ; et
par une oscillation du bras oscillant (13) par rapport au cadre (3), une partie de la roue arrière (15) est mobile au-dessus d'une arête supérieure (28a) du support arrière (28) dans la vue latérale du véhicule.
